# EUROPEAN PATENT SPECIFICATION

(11) **EP 4 747 756 B1**
(45) Date of publication and mention of the grant of the patent: **18.11.2026**
(21) Application number: 24739282.2
(22) Date of filing: 24.06.2024
(51) Int. Cl.: G06F 12/02, G06F 3/06, G06F 9/50, G06N 20/00

(54) **DYNAMICALLY TUNING MEMORY POOL USING TIME SERIES DATA**
DYNAMISCHE ABSTIMMUNG EINES SPEICHERPOOLS UNTER VERWENDUNG VON ZEITREIHENDATEN
RÉGLAGE DYNAMIQUE D'UN POOL DE MÉMOIRE À L'AIDE DE DONNÉES DE SÉRIE CHRONOLOGIQUE

(30) Priority: 21.07.2023 US 202318224710
(43) Date of publication of application: 27.05.2026
(73) Proprietor: International Business Machines Corporation, Armonk, New York 10504 (US)
(72) Inventor: LIU, Dong Hui, Beijing 100101 (CN); JIANG, Peng Hui, Beijing 100101 (CN); LU, Jing, Beijing 100101 (CN); TANG, Xiao Yan, Beijing 100101 (CN); LI, Naijie, Beijing 100101 (CN); SU, Jun, Beijing 100101 (CN); YU, Jia, Beijing 100101 (CN)
(74) Representative: IBM United Kingdom Limited
(86) International application number: PCT/IB2024/056125
(87) International publication number: WO 2025/022198

(56) References cited:
- US-A1- 2019 312 800
- US-A1- 2020 379 896
- US-A1- 2022 035 743
- US-A1- 2022 129 379

## Description

### BACKGROUND

This disclosure is directed to memory systems and dynamic memory management, and more particularly to systems and methods for real-time dynamic memory allocation particularly of dynamic memory allocation of memory pools that allocate fixed- and variable-size blocks, and systems and methods for dynamically tuning memory pools.

In past years, many users have encountered performance problem caused by provisioning improper memory pool size. It is quite a challenge to users that it requires much effort on manually tuning memory pool application by application. Even if application programmer / system programmer provisions a fixed memory pool cell size, it cannot adapt to each execution of the same application.

Memory pool tuning refers to the process of optimizing the allocation and management of memory pools, which are areas of memory set aside for specific purposes. The goal of memory pool tuning is to improve the performance and efficiency of a program by minimizing the amount of time spent allocating and freeing memory.

In the context of the z/OS operating system, the heap pool refers to a dynamic storage area used for allocating and deallocating memory dynamically during program execution. The heap pool is a type of memory pool, which is a specific area of main storage set aside for a particular purpose. Heap memory area is where memory is allocated or deallocated without any order, e.g., occurring responsive to the creating of an object, e.g., using a "new" operator (in C++ programming language) or something similar.

The heap memory pool is created when a program is loaded into memory and is used to dynamically allocate memory as needed during program execution. The size of the heap pool can be configured based on the requirements of the program.

US 2022035743 A1 describes one or more global caches that are dynamically partitioned and sized into one or more cache partitions based on anticipated input/output (IO) workloads.

### SUMMARY

A system and method for dynamically optimizing the memory allocation size of the memory pool for using the memory pool storage area correctly and to monitor the memory pool storage area usage to ensure that it is being used efficiently.

System and method for automatically and dynamically provisioning and managing memory pool cell size resulting in improved application performance by increasing efficiency of memory usage and reducing wasted allocation memory, reducing costs of a program by dynamically tuning of memory pool size allocated to applications, and reducing manual effort on memory pool tuning for massive applications.

System and method for automatically and dynamically provisioning memory pool cell size adaptive to various program executions of various applications even if for the same application.

In one aspect, there is provided a system for allocating memory in a memory storage area in a computer system. The system comprises: a hardware processor associated with a memory storing program instructions in a computer system, the hardware processor running the program instructions configuring the processor to: detect one or more applications running on the computer system, the computer system memory comprising a memory pool storage area for exclusive use by the application; and for each detected application: run a first machine learned model trained to predict, using time-series data obtained from past memory usage by the detected application, a number of allocation requests for memory cells in the memory pool storage area for the detected application; run a second machine learned model trained to predict, using the time-series data obtained from the past memory usage by the detected application, a size of a memory cell to be allocated in the memory pool storage area for each detected application; and dynamically allocate, for each detected application running on the computer system, a corresponding reserved memory pool storage area of a size based on the predicted number of allocations and the predicted memory cell size.

In a further aspect, there is provided a method for allocating memory in a memory storage area in a computer system. The method comprises: detecting, at a hardware processor associated with a memory in a computer system, one or more applications running on the computer system, the computer system memory comprising a memory pool storage area for exclusive use by the application; and for each detected application: running, at the hardware processor, a first machine learned model trained to predict, using time-series data obtained from past memory usage by the detected application, a number of allocation requests for memory cells in the memory pool storage area for the detected application; running, at the hardware processor, a second machine learned model trained to predict, using the time-series data obtained from the past memory usage by the detected application, a size of a memory cell to be allocated in the memory pool storage area for each detected application; and dynamically allocating, by the hardware processor, for each detected application running on the computer system, a corresponding reserved memory pool storage area of a size based on the predicted number of allocations and the predicted memory cell size for the detected application.

A computer readable storage medium storing a program of instructions executable by a machine to perform one or more methods described herein also may be provided.

Further features as well as the structure and operation of various embodiments are described in detail below with reference to the accompanying drawings. In the drawings, like reference numbers indicate identical or functionally similar elements.

### BRIEF DESCRIPTION OF THE DRAWINGS

FIG. 1 depicts a generic block diagram of a simple computer memory pool storage area for an application of which the system and methods of the present invention are invoked to dynamically allocate the size of;
FIG. 2 conceptually depicts a system for dynamic tuning of the memory pool such as shown in FIG. 1 in an embodiment;
FIG. 3 depicts a system implementation in greater detail that makes use of the simulator to create a training data set including generated tuning parameter values "P" labels used to tag the realtime and/or historical data vectors for training the regression model in an embodiment;
FIG. 4 shows a further implementation of the system implementation of FIG. 3 depicting an overall computer-based method that includes the running of both the time series prediction models and a rule-based method to predict memory pool cell size;
FIG. 5 depicts a method of treating the received historical data, particularly, a method of compressing the historical time series data to obtain profile features of an application instance according to an embodiment;
FIG. 6A shows a computer-based system that includes the running of both the time series prediction model and a rule-based method to predict a memory pool cell size for a current running application;
FIG. 6B depicts an alternative embodiment of the computer-based system of FIG. 6A that further includes the running of a further allocation memory cell size clustering technique;
FIG. 7 depicts a method implemented at the computer system of FIG. 1 for dynamically tuning memory pool using time series data;
FIG. 8 depicts a method implemented at the computer system of FIG. 1 for training the regression model used to generate or predict a tuning parameter for use in refining the memory pool size allocation using time series data;
FIG. 9 depicts a method 800 implemented at a simulator running at the computer system of FIG. 1 for generating ground truth labels used in the training of the regression model; and

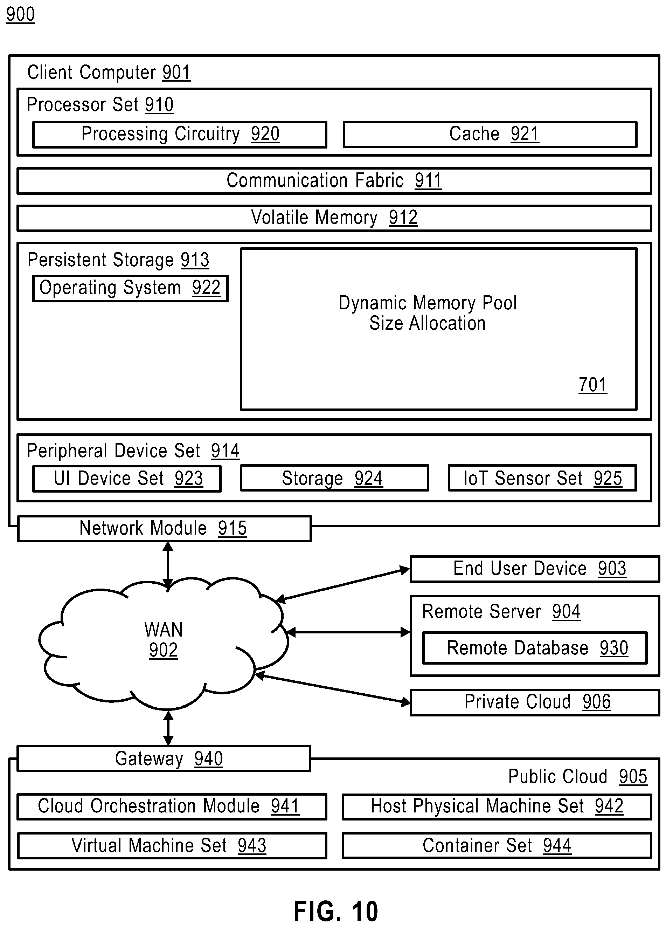

FIG. 10 depicts a computing environment containing an example of an environment for the execution of at least some of the computer code involved in performing the inventive methods according to the embodiments herein.

### DETAILED DESCRIPTION

The following description is made for illustrating the general principles of the invention and is not meant to limit the inventive concepts claimed herein. In the following detailed description, numerous details are set forth in order to provide an understanding of the computer system, computer architectural structure, processor, processor architectural structure, processor instruction execution pipelines, execution units, and their method of operation, memory, heap memory and stacked memory systems, memory pools, etc., however, it will be understood by those skilled in the art that different and numerous embodiments of the computer system, computer architectural structure, processor, processor architectural structure, processor instruction execution pipelines, execution units, memory, heap memory and stacked memory systems, memory pools, etc. and their method of operation may be practiced without those specific details, and the claims and invention should not be limited to the system, assemblies, subassemblies, embodiments, functional units, features, circuitry, processes, methods, aspects, and/or details specifically described and shown herein. Further, particular features described herein can be used in combination with other described features in each of the various possible combinations and permutations.

Unless otherwise specifically defined herein, all terms are to be given their broadest possible interpretation including meanings implied from the specification as well as meanings understood by those skilled in the art and/or as defined in dictionaries, treatises, etc. It must also be noted that, as used in the specification and the appended claims, the singular forms "a," "an" and "the" include plural referents unless otherwise specified, and that the terms "comprises" and/or "comprising" specify the presence of stated features, integers, steps, operations, elements, and/or components, but do not preclude the presence or addition of one or more features, integers, steps, operations, elements, components, and/or groups thereof.

The following discussion omits or only briefly describes conventional features of information processing systems, including processors and microprocessor systems and processor architecture, memory and memory and memory management system architectures which are apparent to those skilled in the art. It is assumed that those skilled in the art are familiar with the general architecture of processors, and, in particular, with processors having execution pipelines making use of various memory units, e.g., stack, heap, cache and other memory systems. It may be noted that a numbered element is numbered according to the figure in which the element is introduced, and is often, but not always, referred to by that number in succeeding figures.

According to an aspect of the invention, there is provided a system for allocating memory in a memory storage area in a computer system. The system includes a hardware processor associated with a memory storing program instructions in a computer system, the hardware processor runs the program of instructions to configure the processor to: detect one or more applications running on the computer system, the computer system memory comprising a memory pool storage area for exclusive use by the application. For each detected application: the hardware processor runs a first machine learned model trained to predict, using time-series data obtained from past memory usage by the detected application, a number of allocation requests for memory cells in the memory pool storage area for the detected application and runs a second machine learned model trained to predict, using the time-series data obtained from the past memory usage by the detected application, a size of a memory cell to be allocated in the memory pool storage area for each detected application. The hardware process then dynamically allocates, for each detected application running on the computer system, a corresponding reserved memory pool storage area of a size based on the predicted number of allocations and the predicted memory cell size. By dynamically allocating memory pool storage area size allocated to applications and managing memory pool cell size, the efficiency of memory usage is increased and incidents of wasted memory pool memory cell allocations is reduced, thereby reducing costs of program execution. Dynamic allocating memory pool storage area size can additionally simplify program development and improve application performance by reducing the overhead of manual memory management as allocating too much memory in the memory pool for an application can lead to wastage, while allocating too little memory in the memory pool for an application can lead to performance issues.

In accordance with an embodiment of the system, the first machine learned model is a time-series prediction model trained with historical data associated with memory pool storage area usage from detected application instances run on the computer system in the past, the historical data comprising time-series data including, a number of allocations and deallocations of memory in the memory pool storage area for each detected application run in the past. The model training using of time-series data including a number of allocations and deallocations of memory in the memory pool storage area for each detected application run in the past results in reduced wastage of memory pool memory and application processing resources during application execution.

In a further embodiment of the system, the second machine learned model is a time-series prediction model trained with historical data associated with memory pool storage area usage from the past detected application instances, the historical data comprising time-series data including a size of the memory cells to be allocated in the memory pool storage area for each detected application run in the past. The model training using of time-series data including a size of the memory cells to be allocated in the memory pool storage area for each detected application run in the past results in reduced wastage of memory pool memory and application processing resources during application execution.

In accordance with an embodiment of the system, prior to the dynamically allocating, the hardware processor is further configured to apply a rule or policy to determine, based on the predicted number of allocations and the predicted memory cell size, whether to proceed to dynamically allocate or not allocate the corresponding reserved memory size of memory in the memory pool storage area based on the predicted number of allocations and the predicted memory cell size for the detected application. The rule or policy applying ensures efficient use of the memory pool size allocation by avoiding memory allocation in the first instance if not deemed warranted based on the predicted number of allocations and the predicted memory cell size for the detected application. This further results in reducing wastage of memory pool memory and application processing resources during application execution.

In accordance with an embodiment of the system, the hardware processor is further configured to apply a rule or policy to determine, based on the predicted number of allocations and the predicted memory cell size, whether to increase an amount of the memory size allocated in the memory pool storage area or to decrease an amount of the memory size allocated in the memory pool storage area for the detected application. The rule or policy applying ensures efficient use of the memory pool size allocated based on the predicted number of allocations and the predicted memory cell size for the detected application which results in reducing wastage of memory pool memory and application processing resources during application execution.

In accordance with an embodiment of the system, to dynamically allocate a memory pool storage area for use by the detected application, the hardware processor is further configured to: apply a clustering method to the time-series data obtained from past memory usage by the application to predict a distribution of memory pool storage area size values associated with detected application. The applied clustering method rule or policy applying ensures efficient use of the memory pool size allocated based on the predicted number of allocations and the predicted memory cell size for the detected application which results in reducing wastage of memory pool memory and application processing resources during application execution.

In accordance with an embodiment of the system, the hardware processor is further configured to run a third machine learned model trained to generate, based on one or more current application profile features associated with the detected application and a predicted cell size for that application, a tuning parameter used to refine the corresponding reserved memory pool storage area size dynamically allocated for the detected application; and dynamically modify the memory pool storage area size allocated for the detected application in response to the generated tuning parameter. The third machine learned model trained to generate a tuning parameter used to refine the corresponding reserved memory pool storage area size dynamically allocated for the detected application and the dynamically modify the memory pool storage area size allocated for the detected application in response to the generated tuning parameter further results in reduced wastage of memory pool memory and application processing resources during application execution.

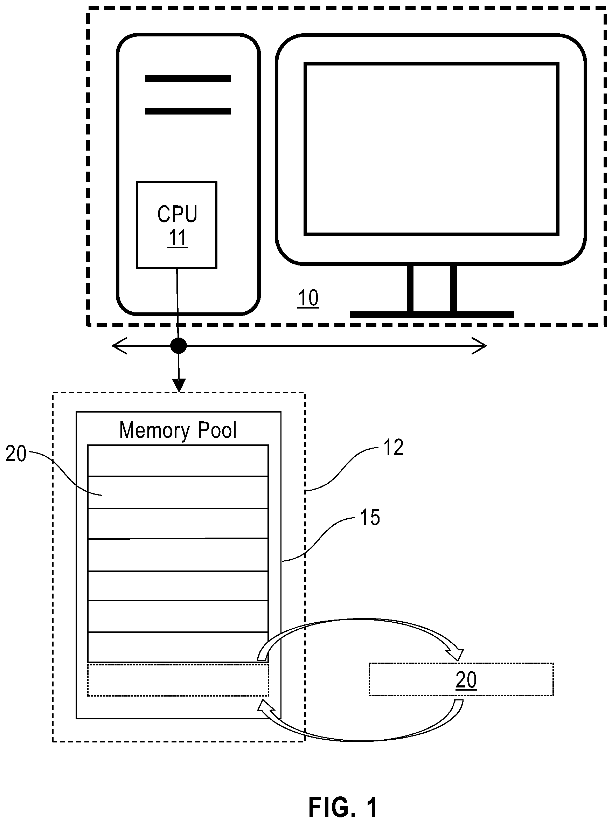

FIG. 1 depicts a generic block diagram of a simple computer system 10 having a control processor or control processing unit (CPU) 11 for running user applications and including a communication data and address bus 14 in communication with a top level memory system 12 including a memory "heap" or memory pool storage area 15 which is a region of reserved address space for exclusive use by a running application. In embodiments herein, systems and methods are invoked to dynamically allocate, during application run-time, a size of the memory pool storage area 15 for a requesting application. In computer system implementations, the top level memory system 12 can includes registers, cache memory, main memory (e.g., random access memory or RAM or dynamic random-access memory or DRAM), electronic disk or optical disks and other storage device memory (not shown). One type of memory shown in FIG. 1 is a "heap" memory 15 (hereinafter referred to as a "memory pool" or "memory pool storage area") which is a region of memory that is a reserved address space memory that applications running on the computer system 10 can use, e.g., upon granting of a memory allocation request from an operating system (not shown) running at the computer system. This memory pool 15 consists of a plurality of fixed size memory cells or blocks 20 that are designed to co-operate and respond to memory managers and other executing program application function calls to program libraries that use allocation mechanisms, e.g., "malloc" and "free" in C, or operators "new" and "delete" in C++). Within this memory area 15, computer system 10 can create one or more memory **"pools" or "heaps" 15 that are** reusable and accessible by a respective requesting application instance to shorten the time that a program can allocate/use/deallocate memory.

In one aspect, memory pools can belong to **pool classes** that specify policies for how their memory is managed. Some memory pools are manually managed by heap management functions (e.g., by explicitly returning memory to a memory pool), and other memory pools are automatically managed (e.g., using a "garbage collector" mechanism that is designed to work with multiple pools to automatically reclaims unreachable memory blocks in different pools). In a computer system 10, multiple detected application instances running on the computer system 10 can call heap management functions such as requests for a memory management system to allocate, access, and deallocate or free-up a number of reserved fixed size memory pool blocks or cells 20 in the memory pool storage area. These reserved memory pool cells are represented by "handles" or reference or object identifiers or "pointers" containing an address of the stored memory block or cell to which it refers at run time. When an application requests memory allocation from the memory management system, the system reserves a corresponding memory pool storage area for the application based on the number of allocations and memory cell size. Similarly, deallocation or freeing up of memory cells is also managed by the memory management system, ensuring efficient utilization of the memory pool storage area. The size of the memory block or cell 20 for a requesting application is configurable, e.g., 1, megabytes (or 1 MB), 20 MB, 100 MB, etc.. and hence, a total size of a corresponding reserved memory pool storage area allotted for an requesting application is configurable.

In one aspect of the present disclosure, there is provided a system and method to dynamically allocate and tune a reserved memory pool storage area of a size determined by using time-series data to improve performance and reduce costs.

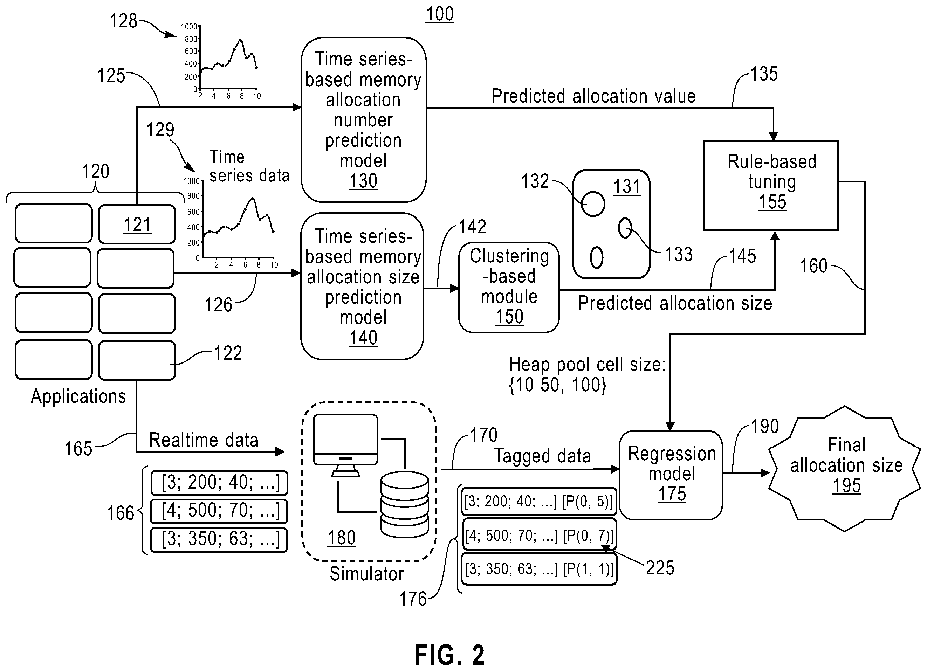

FIG. 2 depicts a computer-implemented system 100 for dynamically allocating and fine-tuning a size of a corresponding reserved memory pool storage area 15 for use by an application detected as currently running on the computer system 10 shown in FIG. 1 (hereinafter "detected application"). As shown in FIG. 2, multiple computer-system program applications 120 are depicted as running on a CPU. In an embodiment, time-series data is obtained and stored for each current running program application over a period of time that is used for dynamic memory tuning of a corresponding memory pool storage area allocated for an application. In one aspect, memory pool storage area usage attributes regarding the number of allocations, deallocation and a size of each reserved memory cell for each memory pool storage allocation requested by detected applications 121 are collected from each application as time-series memory usage data over a period of time, e.g., 7 days, 6 mos., a 1 year, or more, etc., for use in off-line processes to train several time-series prediction models implemented for the dynamic memory pool tuning. This time-series memory usage data is referred to as past memory usage by the detected application.

As shown in FIG. 2, based on detected applications 121 running on the system, time-series memory pool usage data associated with each detected application data is collected over time for each detected application, the data including: historical time-series data 125 representing past memory usage such as: the number of memory pool allocations requested which is commensurate with the number of application instances running on the computer system, e.g., running an application 10 times can result in a memory pool allocation number of 10; and historical time-series data 126 representing past memory usage such as the size of the memory pool reserved storage area allocated/deallocated, e.g., memory pool cell size requests of 20 Mbytes, 100 Mbytes, etc. as requested by each instance of the applications. The historical time-series data 125 can be extracted as vectors obtained from a plot 128 including information about the number of allocation requests for the memory, i.e., the historical number of past allocations and deallocations that occur over time during execution of application instances in the past (e.g., on X-axis) and the size in Mbytes of each memory pool allocation request (e.g., on Y-axis). This historical time series data 125 that includes information about the number of allocation requests for the memory from historical uses of the application 121 is input as data vectors to a first machine learned time series-based prediction model 130 (e.g., an neural network model) trained to predict an number of allocations value 135 for the instant detected application 122 running on computer system. In particular, first machine learned time series-based prediction model 130 is trained to detect memory usage patterns over time and from any memory usage patterns detected, the prediction model 130 can predict a number of allocations that may be requested while running for use to dynamically tune and predict an allocation number value 135 for the currently detected application(s) running.

Likewise, historical time-series data 126 includes information about the size of the memory cells ("memory cell size") requested by applications running on the computing system over a past period of time. In embodiments, a memory cell size allocated in a memory pool is typically a fixed byte length, however, the fixed memory cell size is adjusted according to the methods of the present disclosure. The historical time-series data 126 can be extracted from a plot 129 including information about the number of allocation requests for the memory, i.e., the historical number of past allocations and deallocations that occur over time during execution of application instances in the past (e.g., on X-axis) and the memory cell size (e.g., in Mbytes) of each past memory pool allocation request (e.g., on Y-axis) and formed as data vectors. The historical time series data 126 representing the memory cell size of the past memory pool cell allocations as requested by the application instances over a past period of time is input as data vectors to a second machine-learned time-series prediction model 140 trained to predict a memory cell size value 142 for the current application 122 running on the computer system. The second machine learned time-series memory cell allocation size prediction model 140 is trained to detect memory usage patterns and from any memory usage patterns detected, the second machine-learned time-series prediction model 140 predicts a memory pool size 142 used to dynamically tuning and predict an allocation size (memory pool size) for the current detected application(s) running.

In a further aspect, as show at FIG. 2, in a further implementation, the second machine-learned time-series prediction model 140 output of predicted allocation size values 142 are input to a clustering module 150 that generates a distribution 131 of predicted allocation sizes 132, 133, e.g., for each current detected applications running. That is, clustering-based module 150 is run on the computer system to predict one or more allocation memory cell sizes 145 for a currently run application. Using k-means clustering method applied to the predicted model allocation size outputs 142, the clustering module 150 determines a distribution 131 of memory cell sizes, e.g., 10 Mbyte, 50 Mbyte, 100 Mbytes allocation, that were allocated by past application instances. For instance, the clustering module 150 determines a memory allocation size prediction of a first memory cell size 132 (e.g., 10 MB) and a second memory cell size 133 (e.g., 100 MB) based on prior memory request allocations by the applications running on the system. In an embodiment, the distribution 131 of different memory cell size predict clusters 132, 133 can be determined based on memory usage patterns detected as a result of past historical memory allocation requests for each application instance running on the computer system in the past.

Then, in FIG. 2, in the overall flow, based on a combined predicted number of allocations value 135 and a predicted allocation memory cell size value 145, a determination is made at 155 by applying a rule-based tuning method 155 to determine whether to dynamically allocate, or not allocate, a corresponding reserved memory pool of the predicted memory pool storage area memory cell size value 160 in the first instance based on one or more of the following: the predicted allocation number, a predicted cell size of the clustered distribution of predicted memory allocation sizes, and an allocation value, a job priority level and an estimated job duration. The rule-based tuning method applies a rule or a policy to determine a proceeding action whether to allocate or not, based on one or more factors such as: the predicted the predicted allocation number, a predicted cell size of the clustered distribution of predicted memory allocation sizes, and an allocation value, a job priority level and an estimated job time duration. If it is decided to proceed, the same or another rule or policy can additionally determine whether to increase or decrease a corresponding predicted memory pool allocation memory cell size 160 based on one or more of: the predicted number of allocations, a predicted memory cell size of the clustered distribution of predicted memory allocation sizes, and an allocation value, a job priority level and an estimated job time duration, and the existence or occurrence of an event or circumstance warranting increasing or decreasing the applied reserved memory pool storage area allocation size, e.g., time of year, due to a special promotion, geography, due to special customs and the like. In the example embodiment shown in FIG. 2, the output predicted memory pool allocation memory cell size 160 is a data vector {10,50,100} with each of the three values corresponding to the allocation cell size distributions 131 determined by the clustering module 150.

As further shown in FIG. 2, the determined rule-based tuning method output of memory pool allocation cell size value 160 can be further input to a regression model 175 for use in refining the dynamically recommended memory pool allocation size in order to improve memory use efficiency by more accurately pre-allocating memory cell sizes for direct use by requesting applications. In an embodiment, the computer system will further collect application-associated data for this application instance to generate a profile of the application running, the application profile features including features including but not limited to: the dataset reference count; an average count of the allocations requested over a past time period, e.g., last week; a largest dataset size; an average size of the data allocated for the past time period last, e.g., week; a duration of the previous batch job; and an average memory allocation duration in the past time period, e.g., last week. Such application profile features can be input to a regression model 175 trained to predict a program performance or tuning parameter "P" that is used to fine-tune the predicted memory pool size.

In particular, in view of FIG. 2, based on the inputs including: the time series-based model predictions of both the memory pool allocation sizes 160, and current application-associated application profile features as realtime data associated with current detected applications running, the trained regression model 175 is run to provide a tuning parameter output value "P" 190 that is used to modify (refine or fine-tune) the predicted memory pool size 160 and generate a final memory pool allocation size value 195.

As shown in FIG. 2, the use of regression model 175 accounts for the features of the current applications running on the computer system as the current memory usage attributed to the current application instances can change depending upon the workload on any given day. Thus, the regression model 175 is trained to additionally account for application profile features of the current detected applications running in order to refine the cell size of the memory pool storage area. In an embodiment, a combined predicted allocation size value output 160 and current received realtime profile data of the current detected applications running is input to the regression model 175 to fine-tune or refine the predicted memory size allocation value(s) 160. In an embodiment, the trained regression model 175 receives both the current predicted memory pool allocation size value output 160 resulting from application of the rule-based method and additionally receives a realtime data vector 170 including a sequence of the realtime application profile features data 165 of the application(s) currently running on the system including real data of selected features in a recent sample timeslot. Based on these inputs 160, 170, the regression model generates the tuning parameter output value "P" 190 that is used to modify (refine or fine-tune) the predicted memory pool size 160 and which value indicates whether to increase or decrease the predicted memory pool size to generate a final memory pool allocation size value 195.

In a non-limiting embodiment, the regression model 175 is, for example, a neural network model, a decision trees network, a random forest decision tree network and is trained off-line with application associated time-series data for use in generating a tuning parameter value "P" that is used refine the cell size, wherein the application associated data includes a set of application profile features including, but not limited to: the dataset reference count, an Average dataset reference count of the last week, a largest dataset size, an Average dataset reference count of the last week, the duration of the previous batch job and the average duration of the previous batch job in the last week. This application current profile features data set is input to the regression model 175 used to predict the refined tuning parameter "P" 190.

In operation, for each currently detected application running 122, the system 100 generates a corresponding realtime data vector 165 including current memory pool usage attributes such as current number of memory pool allocations and realtime current memory cell sizes in recent day or hours. For multiple running applications, plural data vectors 166 are obtained. These plural vectors are input to a simulator system 180 to obtain a best corresponding tuning parameter 225. The regression model 175 is then trained using the data vectors 170 consisting of the realtime data vector 165 of a current running application tagged with the ground truth tuning parameter "P" values 225 determined from the simulator. The tuning parameter "P" values 225 determined from the simulator function as ground truth labels obtained from the application features associated with past running applications. The regression model 175, such as a neural network, decision tree, random forest decision tree, is then trained using these inputs.

As further depicted in FIG. 2, the system 100 is thus configured for off-line training of the regression model 175 to generate or predict the tuning parameter "P' 190 used for adjusting the final memory pool allocation size value 195. The operating system then can dynamically re-configure or allocate the final memory pool allocation size value 195 for each application running. As shown in FIG. 2, for the detected applications currently running, a corresponding set of data vectors 166 are generated which represent the current realtime application memory usage at the computer system. Example realtime data vectors 166 are depicted as:
{3; 200; 40; ...}
{4; 500; 70; ...}
{3; 350; 63; ...}

Then using a simulator, each of vectors in data vectors set 166 can be tagged with a corresponding tuning parameter value "P" 225 obtained from running the simulator 180 for simulating application instance runs, each run with a different candidate tuning parameter value. The determined candidate tuning parameter "P" values are determined by simulator system 180 to run the application and characterize a performance or efficiency of the application after running multiple simulations and obtaining multiple simulation outcomes on the simulator 180. That is, for each current running application 122, the corresponding current realtime data values in data vector 165 include the current memory pool usage including current number of allocations and allocation memory cell size for the current running applications. The method then runs each of plural of the data vector in data vector set 166 in a simulator 180 that is used to generate a training data set used to train the regression model 175.

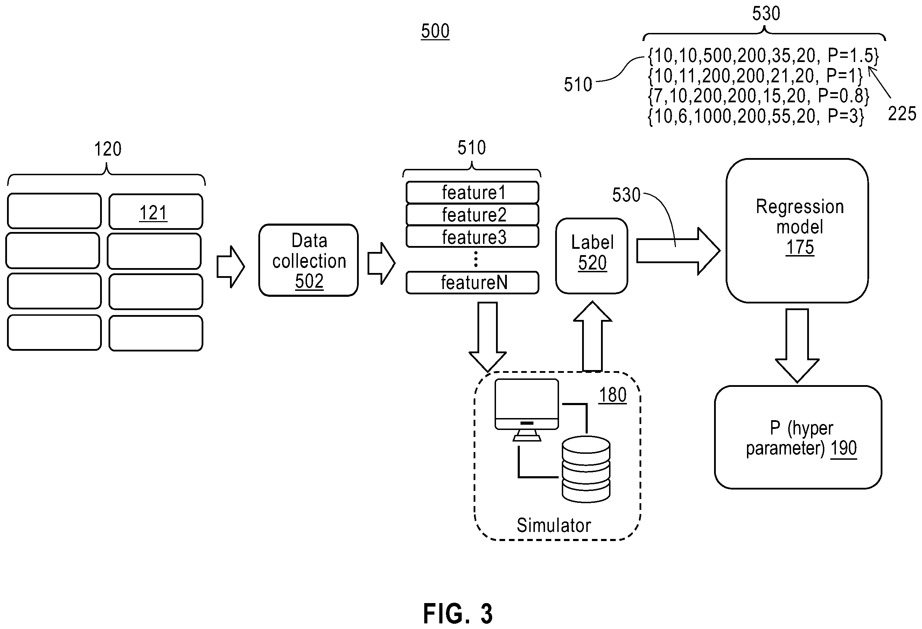

Particularly, in a view of the regression model training system 500 of FIG. 3, historical time-series data 502 associated with the running of each application 121 on the computer system are collected. From data 502 collected over a prior time duration or period, e.g., a week a month, etc. there is generated memory pool usage features data 510 ("application profile features") extracted or generated from the collected data 502. In example embodiment, a set of "N" memory pool usage features 510 associated with the application are extracted or generated. These memory usage features data 510 form inputs to the simulator system for configuring the application to be simulated at simulation system 180. These application profile feature data 510 are input to simulator system to simulate the running of the application at corresponding operating and workload conditions in order to and obtain simulated performance outcomes. The memory pool usage features 510 include but are not limited to: a dataset reference count (e.g., feature 1), an Average count of the last week (e.g., feature 2), a largest dataset size (e.g., feature 3); an average size of the dataset from the last week (e.g., feature 4); a duration of the previous batch job (e.g., feature 5); and an average job duration in the last week (e.g., feature 6).

These collected profile features data 510 are used as inputs 510 to the simulator application running at simulator computer system 180 that simulates the running of the application to generate a tuning parameter "P" output. In particular, the features set data 510 are input to the simulator 180 that, in an off-line process, is programmed to run a simulated application instance and generate a corresponding performance output measure or value for use as a truth label for supervised regression model machine learning. That is, simulator system 180 receives as input the application profile data features 510 and runs simulations of the application under different feature set combinations and obtains a best performance measure or value in for the input memory usage features set 510 of the instant application. This best performance measure or value is used as a ground truth label 520 for supervised training of the regression model 175 to generate memory size allocation tuning parameter "P".

As further shown, FIG. 3 depicts in greater detail use of the simulator 180 to create a training data set including generated labels representing tuning parameter values "P" used to tag the realtime and/or historical data vector set 166 for training the regression model 175. Upon collection of the historical application profile features 510, the simulator simulates the running of the application program based on these feature set values to generate a ground truth label 520 for use in supervised regression model learning of the associated parameter "P". The simulator 180 runs a method to determine a value range of "P". This can include sampling at regular intervals in the range to get a set of "P" values. The features vector is combined with different "P" values to get a set of test samples. Then the method executes (simulates running) of the test samples to choose the best "P value for that features data set (vector). In an embodiment, the method chooses "P' sample candidates for association with the feature vector data set (e.g., choose 10 candidates) and each instance of the application with those features is run (e.g., run 10 times), each time with a different "P" value. Here, each tuning parameter "P" value represents a performance difference or measure between past simulated performance outcomes when run based on past history of profile feature averages of the applications in the past and the current application profile features of the current application instance including the current predicted number of allocations and corresponding memory cell sizes of the current application instance being run on the computer system. Finally, the simulator 180 outcomes including the performance and job duration results of each run program is used to validate the "P" values and the best "P" value associated with the most efficient run, e.g., depending upon an expected duration time, is chosen as the truth label "P" 520 for association with this set of features for this application instance. Then, as shown in FIG. 3, the feature set 510 for each application that is simulated is tagged with the chosen "best" tuning parameter (label) P value 225 obtained from the application runs on the simulator system 180. Each of the feature sets 510 and including determined tuning parameter "P" label 225 are then input as training data 530 to the regression model 175 for training thereof.

Example vectors with six (6) application profile features used in the system 180 simulator are shown as:
{10,10,500,200,35,20, P=1.5}
{10,11,200,200,21,20, P=1}
{7,10,200,200,15,20, P=0.8}
{10,6,1000,200,55,20, P=3}

Once trained with these historical time-series data, the regression model 175 can generate a tuning parameter value "P" 190 based on any current application profile feature data set inputs.

Returning back to FIG. 2, the method then includes tagging each corresponding realtime data vector 165 for each of application vectors in set 166 with the obtained best truth labels 225 to obtain corresponding tagged vector set 176 which are input to the regression model 175 to generate a current tuning parameter "P' value 190 based on the currently run applications' associated profile feature set data. The simulator 180 generates much of the data used to tag training data inputs to the regression model. For the example current memory usage vectors 166, each of the corresponding data vectors in set 176 are tagged with tuning parameter "P" labels 225 are shown in FIG. 2 as vectors:
{3; 200; 40; ...}[P(0.5)]
{4; 500; 70; ...}[P(0.7)]
{3; 350; 63; ...}[P(1.1)]

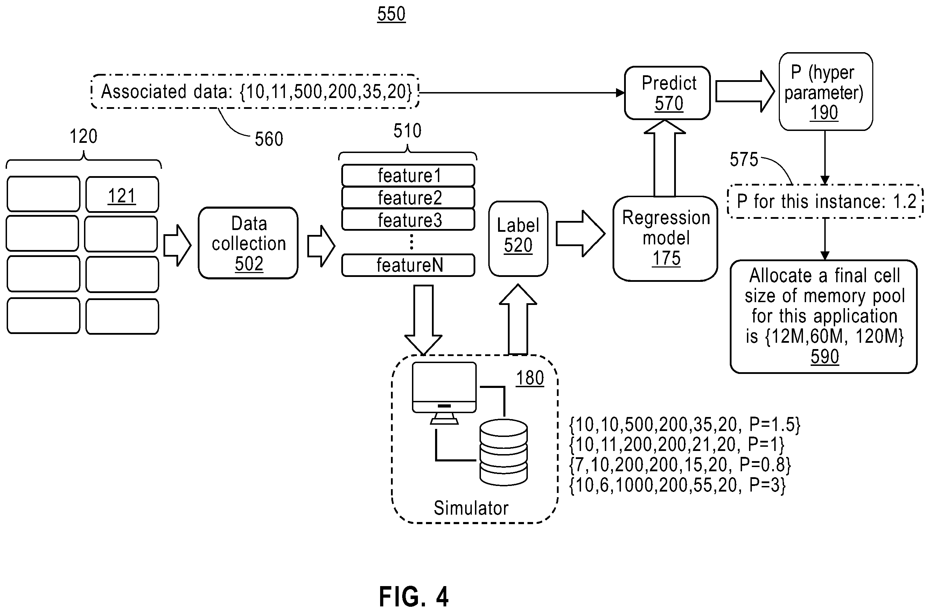

FIG. 4 depicts the further implementation 550 of the system implementation 500 of FIG. 3. As further shown in the system 550 of FIG. 4, after the method collects current application time-series memory usage data 502, this data is processed, such as by compression or averaging, to obtain the current associated application profile features data vector 560 corresponding to the current running application. This current associated application profile features data set 560 is input to the trained regression model 175 to generate at 570 a predicted tuning parameter value "P" 190 for the current application instance. The regression model 175 is trained to generate a tuning parameter "P" output 190 representing a difference measure, e.g., the performance difference between a current running application instance (features of the existing job) and historical features (historical averages of the features set) for these same application programs instances. For example, if regression model generates a tuning parameter value "P" < 1, this indicates that it is either not necessary to modify or possibly decrease the current predicted allocation memory cell size (the workload and data of current running application program instance is less than the usage history average for the application); however, for example, if regression model generates a tuning parameter value "P" > 1, this indicates that it is necessary to modify by increasing the current predicted allocation memory cell size (the current workload and data of the current running application program instance is greater than the history averages of usage for this application instance in the past). Thus, in FIG. 4, given an example predicted tuning parameter value 575 of P = 1.2 predicted by regression model 175, this may indicate increasing, at 590, the allocations of the predicted memory pool allocation size. Thus, for example given the predicted memory pool cell size output 160 vector {10,50,100} the P=1.2 value being greater than 1, will result in a final cell size of the memory pool storage area for this application is increased to {12M,60M,120M} such that at 590 which means there will be 3 heap pools allocated: a first heap pool cell size: 12M; a second heap pool cell size: 60M; and a third heap pool cell size:120M.

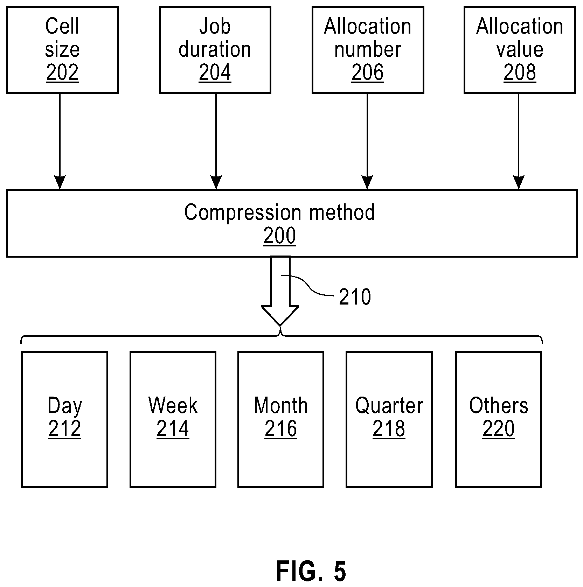

FIG. 5 depicts a method of treating the received historical time-series data, particularly, a method 200 of compressing the historical time series data to obtain profile features of an application instance according to an embodiment. As shown in FIG. 5, each collected set of historical time series data 125, 126 obtained from respective plots 128, 129, is analyzed using methods to obtain application profiles or application "features" that are used in the refining or tuning of the memory pool. The historical time period from which historical time-series data is extracted from a past detected application instance can include data from the previous "N" times of history data, with each previous time of history data from the historical time-series data including but are not limited to: a cell size of the allocated memory pool 202; a corresponding job duration 204; an allocation number 206; and a total allocation size value 208. With respect to each time series history data (of N times of history data) obtained, the system runs a compression method 200 (e.g., LZ encoding, Huffman coding, arithmetic coding, etc.) to compress the time series history data in order to obtain data and information 210 including, but not limited to: The average data of a previous one day duration 212; The average data of a previous one week duration 214; The average data of a previous one month duration 216; and the average data of previous one quarter duration 218. In an embodiment, additionally determined by the compression model 200 are other parameter data values 220 including, but not limited to: The maximum data of previous one day; The maximum data of previous one week; The max data of a previous one month duration; and The max data of a previous one quarter period. The time periods used in the data averaging are not limited to day or week duration periods but can include monthly, quarterly, or any other time period duration.

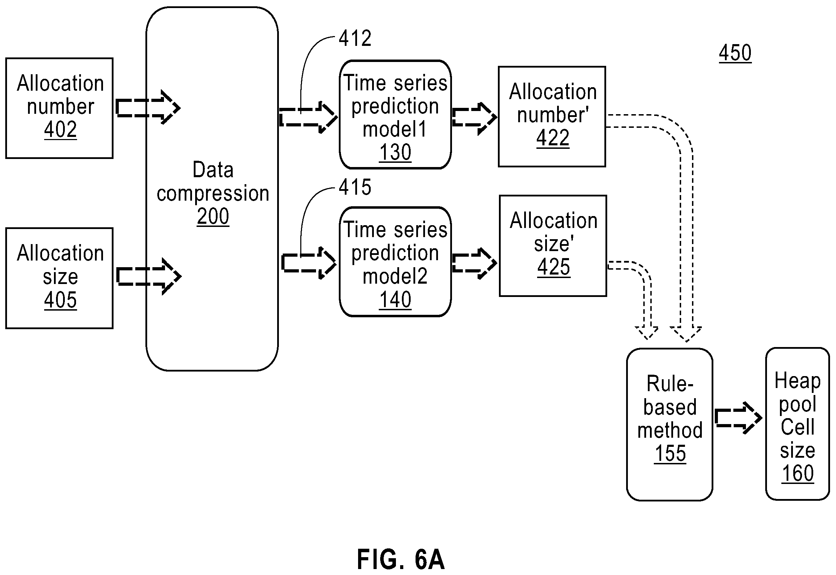

FIG. 6A further shows an overall computer-based system 400 that includes the running of both the first and second machine-learned time-series prediction models 130, 140 and a rule-based method 155 to predict a memory pool cell size for a current running application. In the embodiment of FIG. 6A, the historical time series data includes time series data including the allocation number 402 associated with memory pool allocations requested by the application(s) running on the computer system, and a corresponding allocation size 405 of a cell for each memory allocation request, i.e., the size in bytes of the memory cell or block of memory or the size of the object the application is creating. These data can be compressed by a data compression model 200 implementing common data compression technique(s) of FIG. 5 to obtain compressed time series data 412 of the allocation number and a compressed state 415 of the allocation size. The compressed allocation number time-data series data 412 is input to the first machine learned time series-based prediction model 130 and the compressed allocation size time series data 415 is input to the second machine-learned time-series prediction model 140. Both time prediction models can be conventional Recurring Neural Networks (RNN) or Long Short Term Memory (LSTM). The first machine learned time series-based prediction model 130 processes the allocation number time series data 412 and generates a corresponding prediction: predicted allocation number 422. The second machine-learned time-series prediction model 140 processes the allocation number time series data 415 and generates a corresponding prediction: predicted allocation size 425. Both the predicted allocation number 422 and predicted allocation size 425 are input to the rule-based method 155 which implements a rule or policy to calculate a mathematical expectation or determine a total heap pool cell size 160 for the application.

As an example, based on the application or comparison of the predicted allocation value and predicated allocation size values against a rule or policy, the computer responsively generates a rule-based tuning method output data 160 representing a rule-based outcome determination indicating which memory pool size(s) to dynamically allocate, or not, for each of the current running applications. This rule-based tuning method output data 160 may indicate heap memory or memory pool cell sizes (e.g., 10 MB, 50 MB, 100 MB) to dynamically allocate in the first instance with, for example, the output 100 MB memory pool allocation corresponding to predicted allocation size cluster 132 and the 50 MB allocation corresponding to predicted allocation size cluster 133, for example. For instance, the rule-based tuning method 155 analyzes and applies combined predicated allocation number values 135 and respective predicted clustered allocation sizes 145 and other criteria characterizing the application against rules or policies. Example criteria may include an application or job priority level or an expected job duration representing expected run time of an application. In an embodiment, a rule or policy may specify memory cell size allocations for certain higher priority or more important jobs or applications or jobs of a particular short or long duration or may alternately avoid dynamic memory pool allocation for lower priority jobs or jobs of specified long or short duration. These rules/policies can specify or dictate most efficient combinations of application instances and corresponding size allocations, priority and/or expected durations to determine what, if any, memory pool size to allocate for a current running application in the first instance as an output 160. As an example, if a rule-based policy requires memory pool allocation for 10 application instances at 10 MB cell size, then an allocation umber prediction 135 of 6 instances requesting 10 MB may result in no memory pool allocation based on such a rule or policy specifying a threshold number of allocations; however, if a rule-based policy dictates system capability to accommodate 10 instances of an application requesting 10 MB each instance, then a prediction of 16 instances requesting 10 MB may result in generating a rule-based tuning output threshold value 160 indicating a recommendation to increase memory pool allocation for this currently running application based on this rule or policy. In an example, if application is only run once or several times which is lower than the threshold from the defined rule, the memory pool will not be allocated.

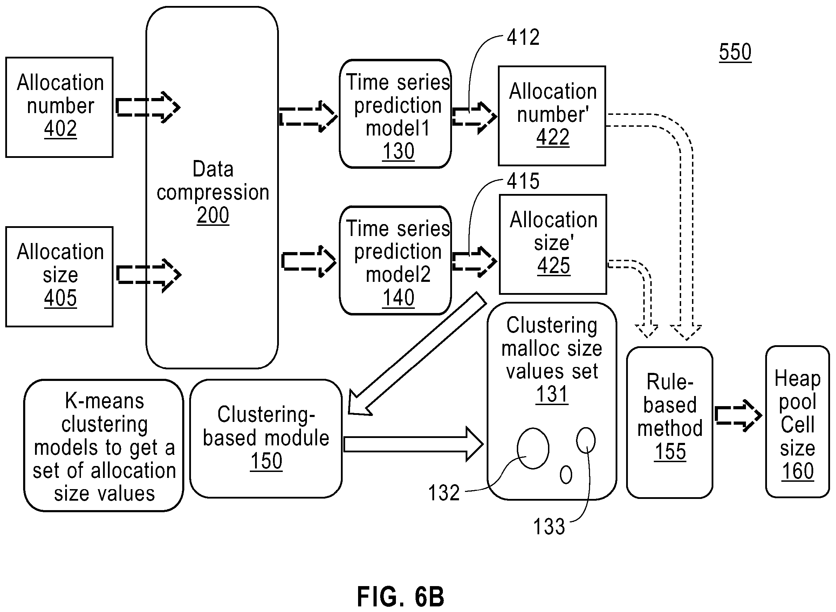

FIG. 6B further shows an alternative computer-based method 450 that includes the running of both the first and second machine-learned time-series prediction models 130, 140 and a rule-based method 155 to predict heap pool cell size. In the embodiment of FIG. 6B, the historical time-series data includes allocation number 402 representing a time series of the number of heap memory object allocations requested by the application(s) and a corresponding size 405 of each memory allocation, i.e., the size in bytes of the block of memory or the size of the object the application is creating. These data can be compressed by data compression model 200 to obtain compressed time series data 412 of the allocation number and a compressed state 415 of the allocation size. The compressed allocation number time data series data 412 is shown as input to the first machine learned time series-based prediction model 130 and the compressed allocation size time series data 415 is shown as input to the second machine-learned time-series prediction model 140. The first machine learned time series-based prediction model 130 processes the allocation number time series data 412 and generates a corresponding prediction: predicted allocation number 422. The second machine-learned time-series prediction model 140 processes the allocation number time series data 415 and generates a corresponding prediction: predicted allocation size 425. In this alternative embodiment, the predicted allocation size 425 based on the historical time-series data is input to a clustering-based module 150 implementing k-means or similar clustering algorithm for processing thereof to determine a clustering distribution, e.g., based on requested malloc size values set 450 called from requesting applications. In an embodiment, clustering-based module 150 can apply a k-means clustering method run to obtain a set or distribution of allocation size values 131 based on the past memory allocation requests. It is one or more of this set of allocation size values 132, 133 that can be input to the rule-based method (regression model) 175 along with the allocation number 422 for generating the predicted heap pool cell size 160.

Both the predicted allocation number 422 and predicted allocation size 425 are input to the rule-based method 155 which calculates a mathematical expectation used to determine the memory pool storage area memory cell size 160.

The system of FIG. 6B can be used as for processing an example time series of history data to predict a memory pool size. Here the example time series data represents a customized batch application which will process daily credit card transactions. The application memory usage is different every day. In the example, the time series of history data is used to predict the distribution of allocation size of this job.

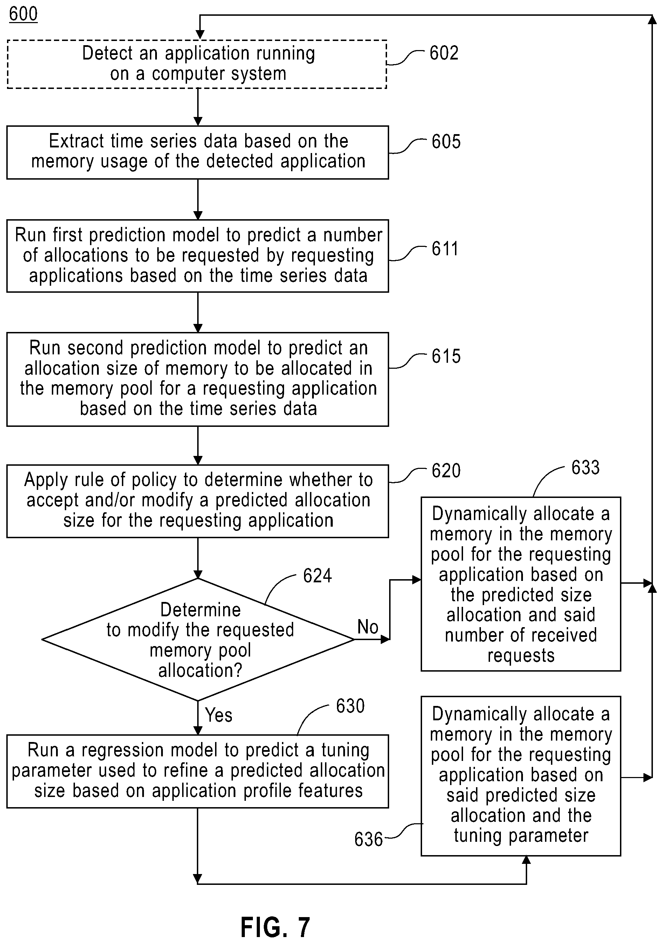

FIG. 7 depicts a method 600 implemented at the computer system of FIG. 1 for dynamically tuning memory pool using time series data. A first step 602 includes the detecting, at the computer system, of an application that is running and is to make use of memory allocated in a memory pool storage area at the computer system. Then, at 605, the method extracts current time-series data and/or past (historical) time-series data based on the memory usage of the memory pool for each application currently running. In embodiments, current realtime memory usage data is not necessary for these two predication models, just historical data. As a non-limiting example, this time series data maybe in the form of a vector:
{3; 200; 40; ...}
including, for an application an allocated number of memory allocation requests (e.g., 3) and allocation sizes for each request (e.g., 200 MB 40 MB, etc.).

Then at 611, FIG. 7, responsive to received time-series data vectors of current running applications, the method runs a first trained time-series prediction model to predict, based on time-series history data, a number of allocations value to be requested by a requesting application running on the computer system. Continuing, at 615, the method runs a second trained time-series prediction model to predict, based on time-series history data, an allocation size of memory to be allocated in the memory pool storage area for each requesting application. Then, at 620, FIG. 7, the method applies a rule or policy to determine whether to accept and/or modify a predicted allocation size of a requesting application. The applied rule-based method or policy can take into account one or more factors such as: the current predicted amount of memory pool cell size requested and /or predicted number of allocations, an assigned priority level of the application, an expected job duration time, a current event or circumstance that can justify increasing or decreasing the applied memory allocation size. Continuing at 624, FIG. 7, a determination is made as to whether to modify the requested memory pool allocation based on the one or more factors.

If, at 624, the applied rule or policy determines that a modification of the predicted memory pool allocation size is warranted, then the process proceeds to step 630 where a further trained time-series prediction model is run to predict a tuning parameter "P" used to refine a predicted allocation size based on the profile features of the current requesting application. These current profile features can be represented in a data vector such as {feature 1, feature 2, feature 3, feature 4, feature 5,. . ., feature N...} with each value corresponding to a current application profile features. Based on the predicted tuning parameter value, the method will proceed to 636 in order to dynamically allocate a corresponding reserved memory in the memory pool for the requesting application based on said predicted size allocation and the tuning parameter. The method returns to step 602 for continuous processing at the computer system.

Thus, in embodiments, application associated data (e.g., profile data) is used to refine the cell size. In an embodiment, the method can be used to refine the allocation size of the memory pool or heap based on the actual applications associated profile features data. For example, if customer application has a promotional activity, the transaction volume and data volume will significantly increase, and it is not possible to accurately predict the memory size of this event solely through time series data. In this embodiment, the actual realtime application profile data can be used to refine the tuning parameter "P".

Otherwise, returning to 624, if it is determined that applied rule or policy determines that a modification of the predicted memory pool allocation size is not warranted, then the process proceeds to step 633 where the computer system dynamically allocates a corresponding reserved memory in the memory pool for the requesting application based on the predicted size allocation and the predicted number of received requests. The method then returns to step 602 for continuous processing at the computer system.

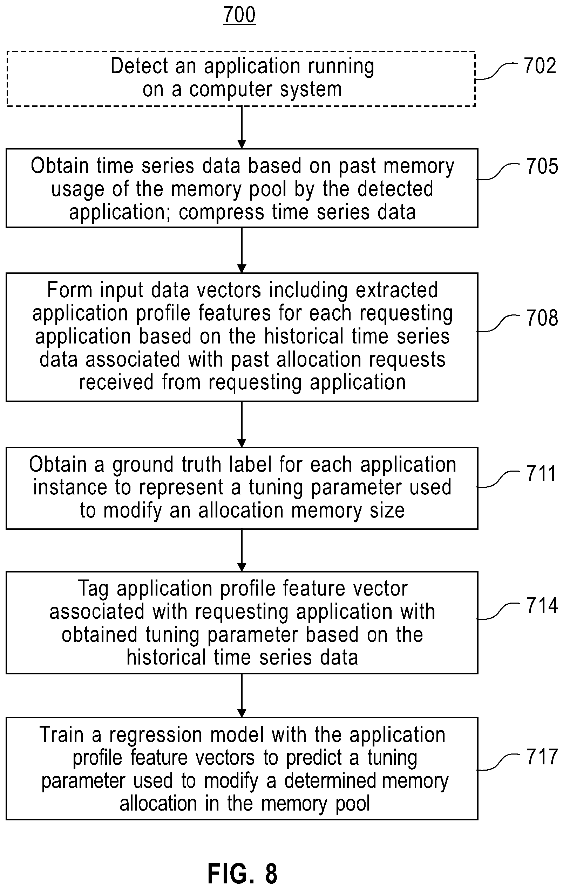

FIG. 8 depicts a method 700 implemented at the computer system of FIG. 1 for training the regression model used to generate or predict a tuning parameter for use in refining the memory pool size allocation using time series data. A first step 702 includes the detecting, at a computer system, an application that is running and that is to make use of memory allocated in a memory pool storage area.

Then, at 705, the method obtains from the historical time series data on past memory usage of the memory pool by the detected application that are relevant to compute one or more application profile features. As shown in FIG. 5, the historical application profile feature data can be compressed time series data using a data compression method. Continuing to 708, FIG. 8 the method forms input data vectors including computed application profile features for each past requesting application based on the historical time series data associated with past allocation requests received from requesting application. For running the regression model, in an embodiment, the past profile features can be represented as a historical application profile feature data vector, e.g., such as {10,10,500,200,35,20...}, with each value corresponding to current application profile features, e.g., the dataset reference count (e.g., 10), the Average count of the last week (e.g., 10), the largest dataset size (e.g., 50 MB); the average size of the last week (e.g., 200 MB); the duration of the previous batch job (e.g., 10); and the average job duration in the last week (e.g., 20), etc..

Continuing to 711, FIG. 8, for each application instance, based on each application's historical profile features, the method obtains a ground truth label for each historical application profile feature data vector instance for use in supervised training of the regression model for use in forecasting a tuning parameter for use in refining a predicted allocation memory size of a currently running application. Then, continuing to 714, FIG. 8, each historical application profile feature data vector associated with requesting application is tagged with the additional obtained tuning parameter value "P" based on said historical time series data. For example, the application profile feature data vector can be represented as a historical application profile feature data vector, e.g., such as {10,10,500,200,35,20, P=1.5}. With each historical application profile feature data vector tagged with the additional obtained tuning parameter value "P", the method can proceed to 717 to train the regression model with the application profile feature vectors and ground truth tuning parameter label "P" for use in predicting a tuning parameter to determine by what amount a determined memory allocation in the memory pool for a current running application is to be modified based on the current application's current profile features.

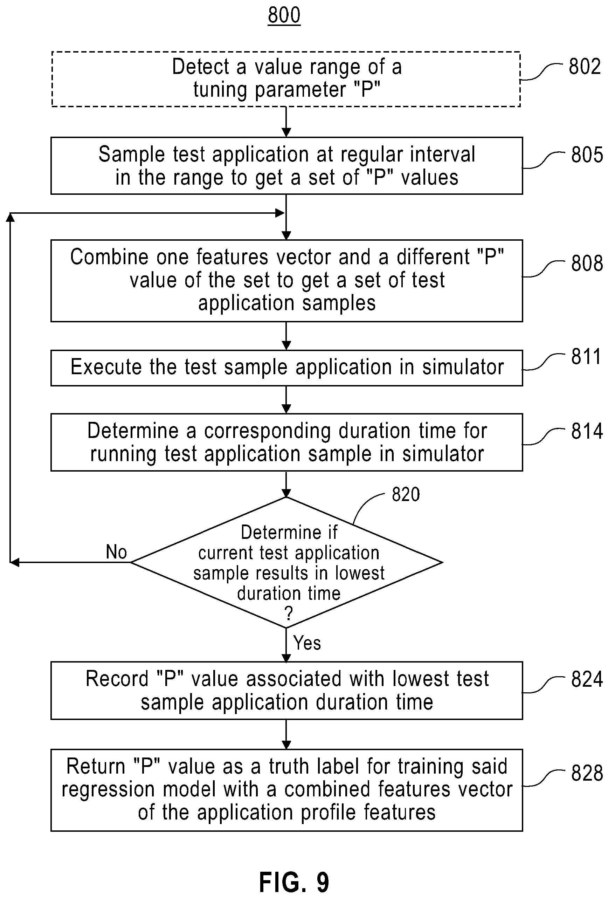

FIG. 9 depicts a method 800 implemented at a simulator running at the computer system of FIG. 1 for generating ground truth labels used in the training of the regression model. The generated ground truth labels is used to train the regression model to generate or predict a tuning parameter for use in refining the memory pool size allocation determined using historical time series data pertaining to a requesting application. A first step 802 includes the determining of a value range for the tuning parameter "P" for that application. Then, at 805, FIG. 8 there is performed generating a sample test application at regular intervals in the range to get a set of "P" values. Then at 808, there is performed the step of combining one features vector and a different "P" value of the set to get a set of test application samples. Then, at 811, the test sample application is run in the program simulator. Continuing to 814, the method determines a corresponding duration time for running test application sample in the simulator. Then, at 820, a determination is made as to whether the current test application sample results in the lowest duration time. If at 820, it is determined that the current test application sample does not result in the lowest duration time, then the process returns to 808 in order to tag the features vector with a different "P" value and the process from 811, 814 and 820 are repeated with the new tagged vector. At 820, once it is determined that the current test application sample and new features vector combined with the different "P" value of the set does result in the lowest duration time, the process proceeds to 824 to record the "P" value associated with current lowest test sample application duration time. Once all "P" values of the range have been processed at the simulator, then at 828, the "P" value is returned as a truth label for training said regression model with a combined features vector of the application profile features.

The methods of FIGs. 7, 8 and 9 implemented in the system 100 of FIG. 2 further include the monitoring of the actual usage of the allocated memory heap by each application(s) and providing the actual usage as feedback for revising or tuning both the time series prediction and regression models.

The system and methods presented herein improve the performance and reduces costs of a program by automatically provisioning and managing memory pool cell size. The described approach can extremely reduce manual effort on memory pool tuning for massive various applications. The approach can further automatically provision the proper memory pool cell size adaptive to various applications. Further, the approach can automatically provision the proper memory pool cell size adaptive to each execution even if for the same application. The approach is technically valuable for application programs, regardless of what platform/operating system it is deployed.

Various aspects of the present disclosure are described by narrative text, flowcharts, block diagrams of computer systems and/or block diagrams of the machine logic included in computer program product (CPP) embodiments. With respect to any flowcharts, depending upon the technology involved, the operations can be performed in a different order than what is shown in a given flowchart. For example, again depending upon the technology involved, two operations shown in successive flowchart blocks may be performed in reverse order, as a single integrated step, concurrently, or in a manner at least partially overlapping in time.

A computer program product embodiment ("CPP embodiment" or "CPP") is a term used in the present disclosure to describe any set of one, or more, storage media (also called "mediums") collectively included in a set of one, or more, storage devices that collectively include machine readable code corresponding to instructions and/or data for performing computer operations specified in a given CPP claim. A "storage device" is any tangible device that can retain and store instructions for use by a computer processor. Without limitation, the computer readable storage medium may be an electronic storage medium, a magnetic storage medium, an optical storage medium, an electromagnetic storage medium, a semiconductor storage medium, a mechanical storage medium, or any suitable combination of the foregoing. Some known types of storage devices that include these mediums include: diskette, hard disk, random access memory (RAM), read-only memory (ROM), erasable programmable read-only memory (EPROM or Flash memory), static random access memory (SRAM), compact disc read-only memory (CD-ROM), digital versatile disk (DVD), memory stick, floppy disk, mechanically encoded device (such as punch cards or pits / lands formed in a major surface of a disc) or any suitable combination of the foregoing. A computer readable storage medium, as that term is used in the present disclosure, is not to be construed as storage in the form of transitory signals *per se,* such as radio waves or other freely propagating electromagnetic waves, electromagnetic waves propagating through a waveguide, light pulses passing through a fiber optic cable, electrical signals communicated through a wire, and/or other transmission media. As will be understood by those of skill in the art, data is typically moved at some occasional points in time during normal operations of a storage device, such as during access, de-fragmentation or garbage collection, but this does not render the storage device as transitory because the data is not transitory while it is stored.

As shown in FIG. 9, computing environment 900 contains an example of an environment for the execution of at least some of the computer code involved in performing the inventive methods, such as the code 701 for dynamic allocating a memory pool size to be allocated in a pool memory for plural applications running on a computer system, e.g., in accordance with the methods shown in FIGs. 7-9. In addition to block 701, computing environment 900 includes, for example, computer 901, wide area network (WAN) 902, end user device (EUD) 903, remote server 904, public cloud 905, and private cloud 906. In this embodiment, computer 901 includes processor set 910 (including processing circuitry 920 and cache 921), communication fabric 911, volatile memory 912, persistent storage 913 (including operating system 922 and block 701, as identified above), peripheral device set 914 (including user interface (UI) device set 923, storage 924, and Internet of Things (IoT) sensor set 925), and network module 915. Remote server 904 includes remote database 930. Public cloud 905 includes gateway 940, cloud orchestration module 941, host physical machine set 942, virtual machine set 943, and container set 944.

Computer 901 may take the form of a desktop computer, laptop computer, tablet computer, smart phone, smart watch or other wearable computer, mainframe computer, quantum computer or any other form of computer or mobile device now known or to be developed in the future that is capable of running a program, accessing a network or querying a database, such as remote database 930. As is well understood in the art of computer technology, and depending upon the technology, performance of a computer-implemented method may be distributed among multiple computers and/or between multiple locations. On the other hand, in this presentation of computing environment 900, detailed discussion is focused on a single computer, specifically computer 901, to keep the presentation as simple as possible. Computer 901 may be located in a cloud, even though it is not shown in a cloud in FIG. 9. On the other hand, computer 901 is not required to be in a cloud except to any extent as may be affirmatively indicated.

Processor Set 910 includes one, or more, computer processors of any type now known or to be developed in the future. Processing circuitry 920 may be distributed over multiple packages, for example, multiple, coordinated integrated circuit chips. Processing circuitry 920 may implement multiple processor threads and/or multiple processor cores. Cache 921 is memory that is located in the processor chip package(s) and is typically used for data or code that should be available for rapid access by the threads or cores running on processor set 910. Cache memories are typically organized into multiple levels depending upon relative proximity to the processing circuitry. Alternatively, some, or all, of the cache for the processor set may be located "off chip." In some computing environments, processor set 910 may be designed for working with qubits and performing quantum computing.

Computer readable program instructions are typically loaded onto computer 901 to cause a series of operational steps to be performed by processor set 910 of computer 901 and thereby effect a computer-implemented method, such that the instructions thus executed will instantiate the methods specified in flowcharts and/or narrative descriptions of computer-implemented methods included in this document (collectively referred to as "the inventive methods"). These computer readable program instructions are stored in various types of computer readable storage media, such as cache 921 and the other storage media discussed below. The program instructions, and associated data, are accessed by processor set 910 to control and direct performance of the inventive methods. In computing environment 900, at least some of the instructions for performing the inventive methods may be stored in block 200 in persistent storage 913.

Communication Fabric 911 is the signal conduction path that allows the various components of computer 901 to communicate with each other. Typically, this fabric is made of switches and electrically conductive paths, such as the switches and electrically conductive paths that make up buses, bridges, physical input / output ports and the like. Other types of signal communication paths may be used, such as fiber optic communication paths and/or wireless communication paths.

Volatile memory 912 is any type of volatile memory now known or to be developed in the future. Examples include dynamic type random access memory (RAM) or static type RAM. Typically, volatile memory 912 is characterized by random access, but this is not required unless affirmatively indicated. In computer 901, the volatile memory 912 is located in a single package and is internal to computer 901, but, alternatively or additionally, the volatile memory may be distributed over multiple packages and/or located externally with respect to computer 901.

Persistent Storage 913 is any form of non-volatile storage for computers that is now known or to be developed in the future. The non-volatility of this storage means that the stored data is maintained regardless of whether power is being supplied to computer 901 and/or directly to persistent storage 913. Persistent storage 913 may be a read only memory (ROM), but typically at least a portion of the persistent storage allows writing of data, deletion of data and re-writing of data. Some familiar forms of persistent storage include magnetic disks and solid state storage devices. Operating system 922 may take several forms, such as various known proprietary operating systems or open source Portable Operating System Interface-type operating systems that employ a kernel. The code included in block 200 typically includes at least some of the computer code involved in performing the inventive methods.

Peripheral Device Set 914 includes the set of peripheral devices of computer 901. Data communication connections between the peripheral devices and the other components of computer 901 may be implemented in various ways, such as Bluetooth connections, Near-Field Communication (NFC) connections, connections made by cables (such as universal serial bus (USB) type cables), insertion-type connections (for example, secure digital (SD) card), connections made through local area communication networks and even connections made through wide area networks such as the internet. In various embodiments, UI device set 923 may include components such as a display screen, speaker, microphone, wearable devices (such as goggles and smart watches), keyboard, mouse, printer, touchpad, game controllers, and haptic devices. Storage 924 is external storage, such as an external hard drive, or insertable storage, such as an SD card. Storage 924 may be persistent and/or volatile. In some embodiments, storage 924 may take the form of a quantum computing storage device for storing data in the form of qubits. In embodiments where computer 901 is required to have a large amount of storage (for example, where computer 901 locally stores and manages a large database) then this storage may be provided by peripheral storage devices designed for storing very large amounts of data, such as a storage area network (SAN) that is shared by multiple, geographically distributed computers. IoT sensor set 925 is made up of sensors that can be used in Internet of Things applications. For example, one sensor may be a thermometer and another sensor may be a motion detector.

Network module 915 is the collection of computer software, hardware, and firmware that allows computer 901 to communicate with other computers through WAN 902. Network module 915 may include hardware, such as modems or Wi-Fi signal transceivers, software for packetizing and/or de-packetizing data for communication network transmission, and/or web browser software for communicating data over the internet. In some embodiments, network control functions and network forwarding functions of network module 915 are performed on the same physical hardware device. In other embodiments (for example, embodiments that utilize software-defined networking (SDN)), the control functions and the forwarding functions of network module 915 are performed on physically separate devices, such that the control functions manage several different network hardware devices. Computer readable program instructions for performing the inventive methods can typically be downloaded to computer 901 from an external computer or external storage device through a network adapter card or network interface included in network module 915.

WAN 902 is any wide area network (for example, the internet) capable of communicating computer data over non-local distances by any technology for communicating computer data, now known or to be developed in the future. In some embodiments, the WAN 902 may be replaced and/or supplemented by local area networks (LANs) designed to communicate data between devices located in a local area, such as a Wi-Fi network. The WAN and/or LANs typically include computer hardware such as copper transmission cables, optical transmission fibers, wireless transmission, routers, firewalls, switches, gateway computers and edge servers.

End user device (EUD) 903 is any computer system that is used and controlled by an end user (for example, a customer of an enterprise that operates computer 901), and may take any of the forms discussed above in connection with computer 901. EUD 903 typically receives helpful and useful data from the operations of computer 901. For example, in a hypothetical case where computer 901 is designed to provide a recommendation to an end user, this recommendation would typically be communicated from network module 915 of computer 901 through WAN 902 to EUD 903. In this way, EUD 903 can display, or otherwise present, the recommendation to an end user. In some embodiments, EUD 903 may be a client device, such as thin client, heavy client, mainframe computer, desktop computer and so on.

Remote Server 904 is any computer system that serves at least some data and/or functionality to computer 901. Remote server 904 may be controlled and used by the same entity that operates computer 901. Remote server 904 represents the machine(s) that collect and store helpful and useful data for use by other computers, such as computer 901. For example, in a hypothetical case where computer 901 is designed and programmed to provide a recommendation based on historical data, then this historical data may be provided to computer 901 from remote database 930 of remote server 904.

Public cloud 905 is any computer system available for use by multiple entities that provides on-demand availability of computer system resources and/or other computer capabilities, especially data storage (cloud storage) and computing power, without direct active management by the user. Cloud computing typically leverages sharing of resources to achieve coherence and economies of scale. The direct and active management of the computing resources of public cloud 905 is performed by the computer hardware and/or software of cloud orchestration module 941. The computing resources provided by public cloud 905 are typically implemented by virtual computing environments that run on various computers making up the computers of host physical machine set 942, which is the universe of physical computers in and/or available to public cloud 905. The virtual computing environments (VCEs) typically take the form of virtual machines from virtual machine set 943 and/or containers from container set 944. It is understood that these VCEs may be stored as images and may be transferred among and between the various physical machine hosts, either as images or after instantiation of the VCE. Cloud orchestration module 941 manages the transfer and storage of images, deploys new instantiations of VCEs and manages active instantiations of VCE deployments. Gateway 940 is the collection of computer software, hardware, and firmware that allows public cloud 905 to communicate through WAN 902.

Some further explanation of virtualized computing environments (VCEs) will now be provided. VCEs can be stored as "images." A new active instance of the VCE can be instantiated from the image. Two familiar types of VCEs are virtual machines and containers. A container is a VCE that uses operating-system-level virtualization. This refers to an operating system feature in which the kernel allows the existence of multiple isolated user-space instances, called containers. These isolated user-space instances typically behave as real computers from the point of view of programs running in them. A computer program running on an ordinary operating system can utilize all resources of that computer, such as connected devices, files and folders, network shares, CPU power, and quantifiable hardware capabilities. However, programs running inside a container can only use the contents of the container and devices assigned to the container, a feature which is known as containerization.

Private cloud 906 is similar to public cloud 905, except that the computing resources are only available for use by a single enterprise. While private cloud 906 is depicted as being in communication with WAN 902, in other embodiments a private cloud may be disconnected from the internet entirely and only accessible through a local/private network. A hybrid cloud is a composition of multiple clouds of different types (for example, private, community or public cloud types), often respectively implemented by different vendors. Each of the multiple clouds remains a separate and discrete entity, but the larger hybrid cloud architecture is bound together by standardized or proprietary technology that enables orchestration, management, and/or data/application portability between the multiple constituent clouds. In this embodiment, public cloud 905 and private cloud 906 are both part of a larger hybrid cloud.

The invention is set out in the appended independent claims. Advantageous embodiments are defined by the appended dependent claims.

## Claims

1. A system for allocating memory in a memory storage area in a computer system comprising:
a hardware processor (11) associated with a memory (12) storing program instructions in a computer system (10), the hardware processor running the program instructions configuring the processor to:
detect one or more applications (121) running on the computer system, the computer system memory comprising a memory pool storage area (15) for exclusive use by the application; and **characterized in that** the program instructions configure the processor to, for each detected application:
run a first machine learned model (130) trained to predict, using time-series data obtained from past memory usage by the detected application, a number of allocation requests for memory cells in the memory pool storage area for the detected application;
run a second machine learned model (140) trained to predict, using the time-series data obtained from said past memory usage by the detected application, a size of a memory cell (20) to be allocated in the memory pool storage area for each detected application; and
dynamically allocate, for each detected application running on the computer system, a corresponding reserved memory pool storage area of a size based on the predicted number of allocations and the predicted memory cell size.

2. The system as claimed in Claim 1, wherein said first machine learned model is a time-series prediction model trained with historical data associated with memory pool storage area usage from detected application instances run on the computer system in the past, said historical data comprising time-series data including, a number of allocations and deallocations of memory in the memory pool storage area for each detected application run in the past; and
said second machine learned model is a time-series prediction model trained with historical data associated with memory pool storage area usage from the past detected application instances, said historical data comprising time-series data including a size of the memory cells to be allocated in the memory pool storage area for each detected application run in the past.

3. The system as claimed in Claim 1, wherein prior to said dynamically allocating, the hardware processor is further configured to:
apply a rule or policy to determine, based on the predicted number of allocations and said predicted memory cell size, whether to proceed to dynamically allocate or not allocate the corresponding reserved memory size of memory in the memory pool storage area based on the predicted number of allocations and the predicted memory cell size for the detected application.

4. The system as claimed in Claim 3, wherein to dynamically allocate for use by the detected application run on the computer system, the corresponding reserved size of a memory in the memory pool storage area, the hardware processor is further configured to:
apply a rule or policy to determine, based on the predicted number of allocations and said predicted memory cell size, whether to increase an amount of the memory size allocated in the memory pool storage area or to decrease an amount of the memory size allocated in the memory pool storage area for the detected application.

5. The system as claimed in Claim 1, wherein to dynamically allocate a corresponding reserved memory pool storage area for use by the detected application, the hardware processor is further configured to:
apply a clustering method to said time-series data obtained from past memory usage by the application to predict a distribution of memory pool storage area size values associated with detected application.

6. The system as claimed in Claim 2, wherein the hardware processor is further configured to:
run a third machine learned model trained to generate, based on one or more current application profile features associated with the detected application and a predicted cell size for that application, a tuning parameter used to refine the corresponding reserved memory pool storage area size dynamically allocated for the detected application; and
dynamically modify the memory pool storage area size allocated for the detected application in response to the generated tuning parameter.

7. The system as claimed in Claim 6, wherein said hardware processor is further configured to:
collect historical time series data comprising one or more application profile features associated with the past memory pool storage area usage of the detected application instances run on the computer system in the past; and
train said third machine learned model using supervised machine learning using model training data comprising said collected one or more application profile features data associated with the past memory pool storage area usage of the detected application instances, and a tuning parameter label associated with the generated tuning parameter.

8. The system as claimed in Claim 7, wherein the one or more profile features of each requesting application comprise one or more selected from: a dataset reference count, an average dataset reference count of a past time period; a largest dataset size. an average dataset reference count of the past time period, a duration of the previous batch job, and an average duration of the previous batch job in the past time period.

9. The system as claimed in Claim 8, further comprising:
a system for simulating a running of each detected application with application profile features of that requesting application, said simulating system running a sample of applications with different combinations of application profile features, and determining, based on performance differences between sampled applications, the tuning parameter label when training said third machine learned model to generate the tuning parameter used to refine the predicted memory cell size value.

10. A method for allocating memory in a memory storage area in a computer system comprising:
detecting (602), at a hardware processor associated with a memory in a computer system, one or more applications running on the computer system, the computer system memory comprising a memory pool storage area for exclusive use by the application; and **characterized by**, for each detected application:
running (611), at the hardware processor, a first machine learned model trained to predict, using time-series data obtained from past memory usage by the detected application, a number of allocation requests for memory cells in the memory pool storage area for the detected application;
running (615), at the hardware processor, a second machine learned model trained to predict, using the time-series data obtained from said past memory usage by the detected application, a size of a memory cell to be allocated in the memory pool storage area for each detected application; and
dynamically allocating (633), by the hardware processor, for each detected application running on the computer system, a corresponding reserved memory pool storage area of a size based on the predicted number of allocations and the predicted memory cell size for the detected application.

11. The method as claimed in Claim 10, wherein said first machine learned model is a time-series prediction model, said method further comprising:
training, using the hardware processor, said time-series prediction model with historical data associated with memory pool storage area usage from detected application instances run on the computer system in the past, said historical data comprising time-series data including, a number of allocations and deallocations of memory in the memory pool storage area for each detected application run in the past; and
said second machine learned model is a time-series prediction model, said method further comprising:
training, using the hardware processor, said time-series prediction model with historical data associated with memory pool storage area usage from the past detected application instances, said historical data comprising time-series data including a size of the memory cells to be allocated in the memory pool storage area for each detected application run in the past.

12. The method as claimed in Claim 11, wherein prior to the dynamically allocating, the method further comprises:
applying, by the hardware processor, a rule or policy to first determine, based on the predicted number of allocations and said predicted memory cell size, whether to proceed to dynamically allocate or not allocate the corresponding reserved memory size of memory in the memory pool storage area based on the predicted number of allocations and the predicted memory cell size for the detected application.

13. The method as claimed in Claim 12, wherein the dynamically allocating an amount of memory in the corresponding reserved memory pool storage area for use by said detected application comprises:
applying, by the hardware processor, a rule or policy to determine, based on the predicted number of allocations and said predicted memory cell size, whether to increase an amount of the memory size allocated in the memory pool storage area or to decrease an amount of the memory size allocated in the memory pool storage area for the detected application.

14. The method as claimed in Claim 12, wherein the dynamically allocating a corresponding reserved memory pool size storage area for use by the detected application comprises:
applying, by the hardware processor, a clustering method to said time-series data obtained from past memory usage by the application to predict a distribution of memory pool storage area size values associated with detected application.

15. A computer program product for allocating memory in a memory storage area in a computer system, the computer program product comprising:
one or more computer readable storage media, and program instructions collectively stored on the one or more computer readable storage media, the program instructions adapted, when run on a computer, to cause the computer to perform the method of any of claims 10 to 14.

## Patentansprüche

1. System zum Zuordnen von Arbeitsspeicher in einem Arbeitsspeicher-Speicherbereich in einem Computersystem, aufweisend:
einen Hardware-Prozessor (11), der einem Arbeitsspeicher (12) zugehörig ist, der Programmanweisungen in einem Computersystem (10) speichert, wobei der Hardware-Prozessor die Programmanweisungen ausführt, die den Prozessor konfigurieren, um:
eine oder mehrere auf dem Computersystem ausgeführte Anwendungen (121) zu erkennen, wobei der Computersystem-Arbeitsspeicher einen Arbeitsspeicher-Pool-Speicherbereich (15) zur exklusiven Nutzung durch die Anwendung aufweist; und **dadurch gekennzeichnet, dass** die Programmanweisungen den Prozessor konfigurieren, um für jede erkannte Anwendung:
ein erstes durch maschinelles Lernen erhaltenes Modell (130) auszuführen, das trainiert wird, um durch Verwenden von Zeitreihendaten, die aus einer vergangenen Arbeitsspeichernutzung durch die erkannte Anwendung erhalten werden, eine Anzahl von Zuordnungsanforderungen für Arbeitsspeicherzellen in dem Arbeitsspeicher-Pool-Speicherbereich für die erkannte Anwendung vorherzusagen;
ein zweites durch maschinelles Lernen erhaltenes Modell (140) auszuführen, das trainiert wird, um durch Verwenden der Zeitreihendaten, die aus der vergangenen Arbeitsspeichernutzung durch die erkannte Anwendung erhalten werden, eine Größe einer Arbeitsspeicherzelle (20) vorherzusagen, die in dem Arbeitsspeicher-Pool-Speicherbereich für jede erkannte Anwendung zugeordnet werden soll; und
für jede erkannte Anwendung, die in dem Computersystem ausgeführt wird, einen entsprechenden reservierten Arbeitsspeicher-Pool-Speicherbereich mit einer Größe, die die vorhergesagte Anzahl von Zuordnungen und die vorhergesagte Größe der Arbeitsspeicherzelle zur Grundlage hat, dynamisch zuzuordnen.

2. System nach Anspruch 1, wobei das erste durch maschinelles Lernen erhaltene Modell ein Zeitreihen-Vorhersagemodell ist, das mit historischen Daten trainiert wird, die einer Nutzung eines Arbeitsspeicher-Pool-Speicherbereichs von erkannten Anwendungsinstanzen zugehörig sind, die auf dem Computersystem in der Vergangenheit ausgeführt wurden, wobei die historischen Daten Zeitreihendaten aufweisen, darunter eine Anzahl von Zuordnungen und Freigaben von Arbeitsspeicher in dem Arbeitsspeicher-Pool-Speicherbereich für jede erkannte Anwendung, die in der Vergangenheit ausgeführt wurde; und
wobei das zweite durch maschinelles Lernen erhaltene Modell ein Zeitreihen-Vorhersagemodell ist, das mit historischen Daten trainiert wird, die einer Nutzung eines Arbeitsspeicher-Pool-Speicherbereichs aus den vergangenen erkannten Anwendungsinstanzen zugehörig sind, wobei die historischen Daten Zeitreihendaten aufweisen, darunter eine Größe der Arbeitsspeicherzellen, die in dem Arbeitsspeicher-Pool-Speicherbereich für jede erkannte Anwendung, die in der Vergangenheit ausgeführt wurde, zugeordnet werden soll.

3. System nach Anspruch 1, wobei vor dem dynamischen Zuordnen der Hardware-Prozessor des Weiteren konfiguriert wird, um:
eine Regel oder Richtlinie anzuwenden, um auf Grundlage der vorhergesagten Anzahl von Zuordnungen und der vorhergesagten Größe der Arbeitsspeicherzelle zu ermitteln, ob damit fortgefahren werden soll, auf Grundlage der vorhergesagten Anzahl von Zuordnungen und der vorhergesagten Größe der Arbeitsspeicherzelle für die erkannte Anwendung die entsprechende reservierte Arbeitsspeichergröße eines Arbeitsspeichers in dem Arbeitsspeicher-Pool-Speicherbereich dynamisch zuzuordnen oder nicht zuzuordnen.

4. System nach Anspruch 3, wobei, um die entsprechende reservierte Größe eines Arbeitsspeichers in dem Arbeitsspeicher-Pool-Speicherbereich zur Nutzung durch die erkannte Anwendung, die auf dem Computersystem ausgeführt wird, dynamisch zuzuordnen, der Hardware-Prozessor des Weiteren konfiguriert wird, um:
eine Regel oder Richtlinie anzuwenden, um auf Grundlage der vorhergesagten Anzahl von Zuordnungen und der vorhergesagten Größe der Arbeitsspeicherzelle zu ermitteln, ob ein Wert der Arbeitsspeichergröße, die in dem Arbeitsspeicher-Pool-Speicherbereich zugeordnet wird, erhöht werden soll oder ob ein Wert der Arbeitsspeichergröße, die in dem Arbeitsspeicher-Pool-Speicherbereich für die erkannte Anwendung zuordnet wird, verringert werden soll.

5. System nach Anspruch 1, wobei, um einen entsprechenden reservierten Arbeitsspeicher-Pool-Speicherbereich zur Nutzung durch die erkannte Anwendung dynamisch zuzuordnen, der Hardware-Prozessor des Weiteren konfiguriert wird, um:
ein Clustering-Verfahren auf die Zeitreihendaten anzuwenden, die aus einer vergangenen Arbeitsspeichernutzung durch die Anwendung erhalten werden, um eine Verteilung von Größenwerten des Arbeitsspeicher-Pool-Speicherbereichs vorherzusagen, die der erkannten Anwendung zugehörig sind.

6. System nach Anspruch 2, wobei der Hardware-Prozessor des Weiteren konfiguriert wird, um:
ein drittes durch maschinelles Lernen erhaltenes Modell auszuführen, das trainiert wird, um auf Grundlage eines oder mehrerer aktueller Anwendungsprofilmerkmale, die der erkannten Anmeldung zugehörig sind, und einer vorhergesagten Zellengröße für diese Anwendung einen Abstimmungsparameter zu erzeugen, der verwendet wird, um die entsprechende reservierte Größe des Arbeitsspeicher-Pool-Speicherbereichs zu verfeinern, die für die erkannte Anwendung dynamisch zugeordnet wird; und
die Größe des Arbeitsspeicher-Pool-Speicherbereichs, die für die erkannte Anwendung zugeordnet wird, als Reaktion auf den erzeugten Abstimmungsparameter dynamisch zu modifizieren.

7. System nach Anspruch 6, wobei der Hardware-Prozessor des Weiteren konfiguriert wird, um:
historische Zeitreihendaten zu erfassen, die ein oder mehrere Anwendungsprofilmerkmale aufweisen, die der vergangenen Nutzung des Arbeitsspeicher-Pool-Speicherbereichs der erkannten Anwendungsinstanzen zugehörig sind, die in der Vergangenheit auf dem Computersystem ausgeführt wurden; und
das dritte durch maschinelles Lernen erhaltene Modell durch Verwenden eines überwachten maschinellen Lernens anhand von Daten für das Modelltraining, die das erfasste eine oder die erfassten mehreren Anwendungsprofilmerkmale aufweisen, die der vergangenen Nutzung des Arbeitsspeicher-Pool-Speicherbereichs der erkannten Anwendungsinstanzen zugehörig sind, und einer Abstimmungsparameter-Kennzeichnung zu trainieren, die dem erzeugten Abstimmungsparameter zugehörig ist.

8. System nach Anspruch 7, wobei das eine oder die mehreren Profilmerkmale jeder anfordernden Anwendung eines oder mehrere aufweisen, ausgewählt aus: einem Datensatz-Referenzzähler, einem durchschnittlichen Datensatz-Referenzzähler eines vergangenen Zeitraums; einer größten Datensatzgröße; einem durchschnittlichen Datensatz-Referenzzähler des vergangenen Zeitraums; einer Dauer der vorangegangenen Stapelaufgabe und einer durchschnittlichen Dauer der vorangegangenen Stapelaufgabe in dem vergangenen Zeitraum.

9. System nach Anspruch 8, des Weiteren aufweisend:
System zum Simulieren eines Ausführens einer jeden erkannten Anwendung mit Anwendungsprofilmerkmalen der anfordernden Anwendung, wobei das simulierende System eine Stichprobe von Anwendungen mit unterschiedlichen Kombinationen von Anwendungsprofilmerkmalen ausführt und auf Grundlage von Leistungsunterschieden zwischen als Stichprobe verwendeten Anwendungen die Abstimmungsparameter-Kennzeichnung ermittelt, wenn das dritte durch maschinelles Lernen erhaltene Modell trainiert wird, um den Abstimmungsparameter zu erzeugen, der verwendet wird, um den vorhergesagten Größenwert der Arbeitsspeicherzelle zu verfeinern.

10. Verfahren zum Zuordnen von Arbeitsspeicher in einem Arbeitsspeicher-Speicherbereich in einem Computersystem, aufweisend:
Erkennen (602) in einem Hardware-Prozessor, der einem Arbeitsspeicher in einem Computersystem zugehörig ist, einer oder mehrerer in dem Computersystem ausgeführter Anwendungen, wobei der Arbeitsspeicher des Computersystems einen Arbeitsspeicher-Pool-Speicherbereich zur exklusiven Nutzung durch die Anwendung aufweist; und für jede erkannte Anwendung **gekennzeichnet durch**:
Ausführen (611) eines ersten durch maschinelles Lernen erhaltenen Modells in dem Hardware-Prozessor, das trainiert wird, um durch Verwenden von Zeitreihendaten, die aus einer vergangenen Arbeitsspeichernutzung durch die erkannte Anwendung erhalten werden, eine Anzahl von Zuordnungsanforderungen für Arbeitsspeicherzellen in dem Arbeitsspeicher-Pool-Speicherbereich für die erkannte Anwendung vorherzusagen;
Ausführen (615) eines zweiten durch maschinelles Lernen erhaltenen Modells in dem Hardware-Prozessor, das trainiert wird, um durch Verwenden der Zeitreihendaten, die aus der vergangenen Arbeitsspeichernutzung durch die erkannte Anwendung erhalten werden, eine Größe einer Arbeitsspeicherzelle vorherzusagen, die in dem Arbeitsspeicher-Pool-Speicherbereich für jede erkannte Anwendung zugeordnet werden soll; und
dynamisches Zuordnen (633) durch den Hardware-Prozessor für jede erkannte Anwendung, die in dem Computersystem ausgeführt wird, eines entsprechenden reservierten Arbeitsspeicher-Pool-Speicherbereichs mit einer Größe, die die vorhergesagte Anzahl von Zuordnungen und die vorhergesagte Größe der Arbeitsspeicherzelle für die erkannte Anwendung zur Grundlage hat.

11. Verfahren nach Anspruch 10, wobei das erste durch maschinelles Lernen erhaltene Modell ein Zeitreihen-Vorhersagemodell ist, wobei das Verfahren des Weiteren aufweist:
Trainieren des Zeitreihen-Vorhersagemodells durch Verwenden des Hardware-Prozessors mit historischen Daten, die einer Nutzung eines Arbeitsspeicher-Pool-Speicherbereichs von erkannten Anwendungsinstanzen zugehörig sind, die auf dem Computersystem in der Vergangenheit ausgeführt wurden, wobei die historischen Daten Zeitreihendaten aufweisen, darunter eine Anzahl von Zuordnungen und Freigaben von Arbeitsspeicher in dem Arbeitsspeicher-Pool-Speicherbereich für jede erkannte Anwendung, die in der Vergangenheit ausgeführt wurde; und
wobei das zweite durch maschinelles Lernen erhaltene Modell ein Zeitreihen-Vorhersagemodell ist, wobei das Verfahren des Weiteren aufweist:
Trainieren des Zeitreihen-Vorhersagemodells durch Verwenden des Hardware-Prozessors mit historischen Daten, die einer Nutzung eines Arbeitsspeicher-Pool-Speicherbereichs aus den vergangenen erkannten Anwendungsinstanzen zugehörig sind, wobei die historischen Daten Zeitreihendaten aufweisen, darunter eine Größe der Arbeitsspeicherzellen, die in dem Arbeitsspeicher-Pool-Speicherbereich für jede erkannte Anwendung, die in der Vergangenheit ausgeführt wurde, zugeordnet werden soll.

12. Verfahren nach Anspruch 11, wobei vor dem dynamischen Zuordnen das Verfahren des Weiteren aufweist:
Anwenden einer Regel oder Richtlinie durch den Hardware-Prozessor, um auf Grundlage der vorhergesagten Anzahl von Zuordnungen und der vorhergesagten Größe der Arbeitsspeicherzelle zuerst zu ermitteln, ob damit fortgefahren werden soll, auf Grundlage der vorhergesagten Anzahl von Zuordnungen und der vorhergesagten Größe der Arbeitsspeicherzelle für die erkannte Anwendung die entsprechende reservierte Arbeitsspeichergröße eines Arbeitsspeichers in dem Arbeitsspeicher-Pool-Speicherbereich dynamisch zuzuordnen oder nicht zuzuordnen.

13. Verfahren nach Anspruch 12, wobei das dynamische Zuordnen einer Menge an Arbeitsspeicher in dem entsprechenden reservierten Arbeitsspeicher-Pool-Speicherplatz zur Nutzung durch die erkannte Anwendung aufweist:
Anwenden einer Regel oder Richtlinie durch den Hardware-Prozessor, um auf Grundlage der vorhergesagten Anzahl von Zuordnungen und der vorhergesagten Größe der Arbeitsspeicherzelle zu ermitteln, ob ein Wert der Arbeitsspeichergröße, die in dem Arbeitsspeicher-Pool-Speicherbereich zugeordnet wird, erhöht werden soll oder ob ein Wert der Arbeitsspeichergröße, die in dem Arbeitsspeicher-Pool-Speicherbereich für die erkannte Anwendung zuordnet wird, verringert werden soll.

14. Verfahren nach Anspruch 12, wobei das dynamische Zuordnen eines entsprechenden reservierten Arbeitsspeicher-Pool-Speicherbereichs zur Nutzung durch die erkannte Anwendung aufweist:
Anwenden eines Clustering-Verfahrens durch den Hardware-Prozessor auf die Zeitreihendaten, die aus einer vergangenen Arbeitsspeichernutzung durch die Anwendung erhalten werden, um eine Verteilung von Größenwerten des Arbeitsspeicher-Pool-Speicherbereichs vorherzusagen, die der erkannten Anwendung zugehörig sind.

15. Computerprogrammprodukt zum Zuordnen von Arbeitsspeicher in einem Arbeitsspeicher-Speicherbereich in einem Computersystem, wobei das Computerprogrammprodukt aufweist:
ein oder mehrere computerlesbare Speichermedien sowie Programmanweisungen, die auf dem einen oder den mehreren computerlesbaren Speichermedien gemeinsam gespeichert werden, wobei die Programmanweisungen so gestaltet sind, dass sie bei Ausführung auf einem Computer den Computer veranlassen, das Verfahren nach einem beliebigen der Ansprüche 10 bis 14 durchzuführen.

## Revendications

1. Système d'allocation de mémoire dans une zone de stockage en mémoire dans un système informatique comprenant :
un processeur matériel (11) associé à une mémoire (12) mémorisant des instructions de programme dans un système informatique (10), le processeur matériel exécutant les instructions de programme configurant le processeur pour :
détecter une ou plusieurs applications (121) exécutées sur le système informatique, la mémoire de système informatique comprenant une zone de stockage en mémoire de type pool (15) réservée à l'usage exclusif de l'application ; et **caractérisé en ce que** les instructions de programme configurent le processeur à, pour chaque application détectée :
exécuter un premier modèle d'apprentissage automatique (130) entraîné à prédire, en utilisant des données de série chronologique issues de l'utilisation de mémoire passée par l'application détectée, un nombre de demandes d'allocation de cellules de mémoire dans la zone de stockage en mémoire de type pool pour l'application détectée ;
exécuter un deuxième modèle d'apprentissage automatique (140) entraîné à prédire, en utilisant des données de série chronologique issues de ladite utilisation de mémoire passée par l'application détectée, une taille d'une cellule de mémoire (20) à allouer dans la zone de stockage en mémoire de type pool pour chaque application détectée ; et
allouer dynamiquement, pour chaque application détectée s'exécutant sur le système informatique, une zone de stockage en mémoire de type pool réservée correspondante d'une taille basée sur le nombre prédit d'allocations et la taille prédite des cellules de mémoire.

2. Système selon la revendication 1, dans lequel ledit premier modèle d'apprentissage automatique est un modèle de prédiction de série chronologique entraîné à l'aide de données historiques relatives à l'utilisation de la zone de stockage en mémoire de type pool provenant d'instances d'applications détectées exécutées sur le système informatique dans le passé, lesdites données historiques comprenant des données de série chronologique incluant un nombre d'allocations et de désallocations de mémoire dans la zone de stockage en mémoire de type pool pour chaque application détectée exécutée dans le passé ; et
ledit deuxième modèle d'apprentissage automatique est un modèle de prédiction de série chronologique entraîné à l'aide de données historiques relatives à l'utilisation de la zone de stockage en mémoire de type pool provenant d'instances d'applications détectées dans le passé, lesdites données historiques comprenant des données de série chronologique incluant une taille des cellules de mémoire à allouer dans la zone de stockage en mémoire de type pool pour chaque application détectée exécutée dans le passé.

3. Système selon la revendication 1, dans lequel, avant ladite allocation dynamique, le processeur matériel est en outre configuré pour :
appliquer une règle ou une directive afin de déterminer, sur la base du nombre d'allocations prédit et de ladite taille de cellule de mémoire prédite, s'il convient de procéder ou non d'allouer dynamiquement la taille de mémoire réservée correspondante dans la zone de stockage en mémoire de type pool, sur la base du nombre d'allocations prédit et de la taille de cellule de mémoire prédite pour l'application détectée.

4. Système selon la revendication 3, dans lequel, afin d'allouer dynamiquement pour l'utilisation par l'application détectée exécutée sur le système informatique, la taille réservée correspondante d'une mémoire dans la zone de stockage en mémoire de type pool, le processeur matériel est en outre configuré pour :
appliquer une règle ou une directive afin de déterminer, sur la base du nombre d'allocations prédit et de ladite taille de cellule de mémoire prédite, s'il convient d'augmenter une quantité de taille de mémoire allouée dans la zone de stockage en mémoire de type pool ou de diminuer une quantité de taille de mémoire allouée dans la zone de stockage en mémoire de type pool pour l'application détectée.

5. Système selon la revendication 1, dans lequel, pour allouer dynamiquement une zone de stockage en mémoire de type pool réservée correspondante pour l'utilisation par l'application détectée, le processeur matériel est en outre configuré pour :
appliquer un procédé de groupement aux données de série chronologique issues de l'utilisation passée de la mémoire par l'application afin de prédire une distribution des valeurs de taille de zone de stockage en mémoire de type pool associée à l'application détectée.

6. Système selon la revendication 2, dans lequel le processeur matériel est en outre configuré pour :
exécuter un troisième modèle d'apprentissage automatique entraîné pour générer, sur la base d'une ou plusieurs caractéristiques de profil d'application actuelles associées à l'application détectée et d'une taille de cellule prédite pour cette application, un paramètre de réglage utilisé pour affiner la taille de la zone de stockage en mémoire de type pool réservée correspondante allouée dynamiquement à l'application détectée ; et
modifier dynamiquement la taille de la zone de stockage en mémoire de type pool allouée à l'application détectée en réponse au paramètre de réglage généré.

7. Système selon la revendication 6, dans lequel ledit processeur matériel est en outre configuré pour :
collecter des données historiques de série chronologique comprenant une ou plusieurs caractéristiques de profil d'application associées à l'utilisation passée de la zone de stockage en mémoire de type pool des instances d'application détectées exécutées sur le système informatique dans le passé ; et
entraîner ledit troisième modèle d'apprentissage automatique à l'aide d'un apprentissage automatique supervisé, en utilisant des données d'entraînement de modèle comprenant lesdites données collectées sur une ou plusieurs caractéristiques de profil d'application associées à l'utilisation passée de la zone de stockage en mémoire de type pool des instances d'application détectées, ainsi qu'une étiquette de paramètre de réglage associée au paramètre de réglage généré.

8. Système selon la revendication 7, dans lequel l'une ou plusieurs caractéristiques de profil de chaque application requérante comprennent une ou plusieurs des caractéristiques suivantes : un nombre de références d'un ensemble de données, un nombre moyen de références d'un ensemble de données sur une période antérieure, une taille la plus grande d'ensemble de données, un nombre moyen de références d'ensemble de données sur la période antérieure, une durée du traitement par lots précédent et une durée moyenne du traitement par lots précédent sur la période antérieure.

9. Système selon la revendication 8, comprenant en outre :
un système de simulation d'une exécution de chaque application détectée avec les caractéristiques de profil d'application de cette application requérante, ledit système de simulation exécutant un échantillon d'applications avec différentes combinaisons de caractéristiques de profil d'application, et déterminant, sur la base des différences de performance entre les applications échantillonnées, l'étiquette de paramètre de réglage lors de l'entraînement dudit troisième modèle d'apprentissage automatique pour générer le paramètre de réglage utilisé pour affiner la valeur de la taille de cellule de mémoire prédite.

10. Procédé d'allocation de mémoire dans une zone de stockage en mémoire dans un système informatique, comprenant :
la détection (602), au niveau d'un processeur matériel associé à une mémoire dans un système informatique, d'une ou plusieurs applications s'exécutant sur le système informatique, la mémoire de système informatique comprenant une zone de stockage en mémoire de type pool réservée à l'usage exclusif de l'application ; et caractérisé à, pour chaque application détectée :
l'exécution (611), au niveau du processeur matériel, d'un premier modèle d'apprentissage automatique entraîné à prédire, en utilisant des données de série chronologique issues de l'utilisation passée de la mémoire par l'application détectée, d'un nombre de demandes d'allocation de cellules de mémoire dans la zone de stockage en mémoire de type pool pour l'application détectée ;
l'exécution (615), au niveau du processeur matériel, d'un deuxième modèle d'apprentissage automatique entraîné à prédire, en utilisant des données de série chronologique issues de ladite utilisation passée de la mémoire par l'application détectée, une taille d'une cellule de mémoire à allouer dans la zone de stockage en mémoire de type pool pour chaque application détectée ; et
l'allocation dynamiquement (633), par le processeur matériel, pour chaque application détectée s'exécutant sur le système informatique, d'une zone de stockage en mémoire de type pool réservée correspondante d'une taille basée sur le nombre prédit d'allocations et la taille prédite de la cellule de mémoire pour l'application détectée.

11. Procédé selon la revendication 10, dans lequel ledit premier modèle d'apprentissage automatique est un modèle de prédiction de série chronologique, ledit procédé comprenant en outre :
l'entraînement, en utilisant le processeur matériel, dudit modèle de prédiction de série chronologique avec des données historiques relatives à l'utilisation de la zone de stockage en mémoire de type pool provenant d'instances d'application détectées exécutées sur le système informatique dans le passé, lesdites données historiques comprenant des données de série chronologique incluant un nombre d'allocations et de désallocations de mémoire dans la zone de stockage en mémoire de type pool pour chaque application détectée exécutée dans le passé ; et
ledit deuxième modèle d'apprentissage automatique est un modèle de prédiction de série chronologique, ledit procédé comprenant en outre :
l'entraînement, en utilisant le processeur matériel, dudit modèle de prédiction de série chronologique avec des données historiques relatives à l'utilisation de la zone de stockage en mémoire de type pool provenant d'instances d'application détectées dans le passé, lesdites données historiques comprenant des données de série chronologique incluant une taille des cellules de mémoire à allouer dans la zone de stockage en mémoire de type pool pour chaque application détectée et exécutée dans le passé.

12. Procédé selon la revendication 11, dans lequel, avant l'allocation dynamique, le procédé comprend en outre :
l'application, par le processeur matériel, d'une règle ou d'une directive afin de déterminer tout d'abord, sur la base du nombre d'allocations prédit et de ladite taille prédite de cellules de mémoire, s'il convient de procéder ou non d'allouer dynamiquement la taille de mémoire réservée correspondante dans la zone de stockage en mémoire de type pool, sur la base du nombre d'allocations prédit et de la taille prédite des cellules de mémoire pour l'application détectée.

13. Procédé selon la revendication 12, dans lequel l'allocation dynamique d'une quantité de mémoire dans la zone de stockage en mémoire de type pool réservée correspondante pour l'utilisation par ladite application détectée comprend :
l'application, par le processeur matériel, d'une règle ou d'une directive pour déterminer, sur la base du nombre prédit d'allocations et de ladite taille prédite des cellules de mémoire, s'il convient d'augmenter une quantité de taille de mémoire allouée dans la zone de stockage en mémoire de type pool ou de diminuer une quantité de taille de mémoire allouée dans la zone de stockage en mémoire de type pool pour l'application détectée.

14. Procédé selon la revendication 12, dans lequel l'allocation dynamique d'une zone de stockage en mémoire de taille de pool de mémoire réservée correspondante pour l'utilisation par l'application détectée comprend :
l'application, par le processeur matériel, d'un procédé de groupement auxdites données de série chronologique issues de l'utilisation passée de la mémoire par l'application afin de prédire une distribution des valeurs de taille de zone de stockage en mémoire de type pool associée à l'application détectée.

15. Produit de programme informatique pour allouer de la mémoire dans une zone de stockage en mémoire dans un système informatique, le produit de programme informatique comprenant :
un ou plusieurs supports de mémorisation lisibles par ordinateur et des instructions de programme mémorisées collectivement sur un ou plusieurs supports de mémorisation lisibles par ordinateur, les instructions de programme étant adaptées, lorsqu'elles sont exécutées sur un ordinateur, pour amener l'ordinateur à exécuter le procédé d'une quelconque des revendications 10 à 14.
